# EUROPEAN PATENT SPECIFICATION

(11) **EP 4 388 688 B1**
(45) Date of publication and mention of the grant of the patent: **17.09.2025**
(21) Application number: 21772945.8
(22) Date of filing: 18.08.2021
(51) Int. Cl.: H04L 1/00, H04L 1/08

(54) **REPETITION FOR MULTIPLE TRANSPORT BLOCKS WITH SINGLE SCHEDULING GRANT**
WIEDERHOLUNG FÜR MEHRERE TRANSPORTBLÖCKE MIT EINZELPLANUNGSBERECHTIGUNG
RÉPÉTITION POUR BLOCS DE TRANSPORT MULTIPLES AVEC UN OCTROI DE PLANIFICATION UNIQUE

(43) Date of publication of application: 26.06.2024
(73) Proprietor: QUALCOMM Incorporated, San Diego, California 92121-1714 (US)
(72) Inventor: GUO, Shaozhen, San Diego, California 92121-1714 (US); KHOSHNEVISAN, Mostafa, San Diego, California 92121-1714 (US); SUN, Jing, San Diego, California 92121-1714 (US); ZHANG, Xiaoxia, San Diego, California 92121-1714 (US); XU, Changlong, San Diego, California 92121-1714 (US); PRAKASH, Rajat, San Diego, California 92121-1714 (US)
(74) Representative: Tomkins & Co
(86) International application number: PCT/CN2021/113205
(87) International publication number: WO 2023/019462

(56) References cited:
- TCL: "Enhancements for unlicensed band URLLC/IIoT", vol. RAN WG1, no. e-Meeting; 20210125 - 20210205, 18 January 2021 (2021-01-18), XP051970434, Retrieved from the Internet <URL:https://ftp.3gpp.org/tsg_ran/WG1_RL1/TSGR1_104-e/Docs/R1-2100543.zip R1-2100543_TCL_Enhancement_for_Unlicensed_URLLC_8.3.2.docx> [retrieved on 20210118]

## Description

### TECHNICAL FIELD

The present disclosure is directed to wireless communication systems and methods, and in particular to systems and methods for communicating repetitions of multiple transport blocks associated with a scheduling grant.

### INTRODUCTION

Wireless communications systems are widely deployed to provide various types of communication content such as voice, video, packet data, messaging, broadcast, and so on. These systems may be capable of supporting communication with multiple users by sharing the available system resources (*e.g.*, time, frequency, and power). A wireless multiple-access communications system may include a number of base stations (BSs), each simultaneously supporting communications for multiple communication devices, which may be otherwise known as user equipment (UE).

To meet the growing demands for expanded mobile broadband connectivity, wireless communication technologies are advancing from the long term evolution (LTE) technology to a next generation new radio (NR) technology, which may be referred to as 5^{th} Generation (5G). For example, NR is designed to provide a lower latency, a higher bandwidth or a higher throughput, and a higher reliability than LTE. NR is designed to operate over a wide array of spectrum bands, for example, from low-frequency bands below about 1 gigahertz (GHz) and mid-frequency bands from about 1 GHz to about 6 GHz, to high-frequency bands such as millimeter wave (mmWave) bands. NR is also designed to operate across different spectrum types, from licensed spectrum to unlicensed and shared spectrum. Spectrum sharing enables operators to opportunistically aggregate spectrums to dynamically support high-bandwidth services. Spectrum sharing can extend the benefit of NR technologies to operating entities that may not have access to a licensed spectrum.

One approach to providing a high-reliability communication is to use transport block (TB) repetition to transmit downlink (DL) and/or uplink (UL) payloads, which may also be referred to as TBs, multiple times. This may increase the chances that the BS or UE successfully receives and/or decodes the payload. To further improve communication reliability, hybrid automatic repeat request (HARQ) techniques can be applied to TB repetition transmission whereby the BS schedules the UE with a retransmission of one or more TBs.

TCL: "Enhancements for unlicensed band URLLC/lloT", 3GPP DRAFT; R1-2100543, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210125 - 20210205 18 January 2021 (2021-01-18), discloses enhancements for unlicensed band URLLC/IIOT.

### BRIEF SUMMARY

The invention is defined by the appended claims.

### BRIEF DESCRIPTION OF THE DRAWINGS

FIG. 1 illustrates a wireless communication network according to some aspects of the present disclosure.
FIG. 2A illustrates a hybrid automatic repeat request (HARQ) communication scenario according to some aspects of the present disclosure.
FIG. 2B illustrates a HARQ communication scenario according to some aspects of the present disclosure.
FIG. 3A illustrates a multi-transport block (TB) repetition communication scheme according to some aspects of the present disclosure.
FIG. 3B illustrates a multi-TB repetition communication scheme according to some aspects of the present disclosure.
FIG. 3C illustrates a multi-TB repetition communication scheme according to some aspects of the present disclosure.
FIG. 3D illustrates a multi-TB repetition communication scheme according to some aspects of the present disclosure.
FIG. 4A illustrates a multi-TB repetition communication scheme according to some aspects of the present disclosure.
FIG. 4B illustrates a multi-TB repetition communication scheme according to some aspects of the present disclosure.
FIG. 5A illustrates a multi-TB repetition communication scheme according to some aspects of the present disclosure.
FIG. 5B illustrates a multi-TB repetition communication scheme according to some aspects of the present disclosure.
FIG. 5C illustrates a multi-TB repetition communication scheme according to some aspects of the present disclosure.
FIG. 6A illustrates a multi-TB repetition communication scheme according to some aspects of the present disclosure.
FIG. 6B illustrates a multi-TB repetition communication scheme according to some aspects of the present disclosure.
FIG. 6C illustrates a multi-TB repetition communication scheme according to some aspects of the present disclosure.
FIG. 6D illustrates a multi-TB repetition communication scheme according to some aspects of the present disclosure.
FIG. 7A illustrates a multi-TB repetition communication scheme according to some aspects of the present disclosure.
FIG. 7B illustrates a multi-TB repetition communication scheme according to some aspects of the present disclosure.
FIG. 8 is a signaling diagram illustrating a method for multi-TB repetition communication according to some aspects of the present disclosure.
FIG. 9 is a signaling diagram illustrating a method for multi-TB repetition communication according to some aspects of the present disclosure.
FIG. 10 is a block diagram of a user equipment (UE) according to some aspects of the present disclosure.
FIG. 11 is a block diagram of an exemplary base station (BS) according to some aspects of the present disclosure.
FIG. 12 is a flow diagram of a communication method according to some aspects of the present disclosure.
FIG. 13 is a flow diagram of a communication method according to some aspects of the present disclosure.

### DETAILED DESCRIPTION

The detailed description set forth below, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form in order to avoid obscuring such concepts.

This disclosure relates generally to wireless communications systems, also referred to as wireless communications networks. In various embodiments, the techniques and apparatus may be used for wireless communication networks such as code division multiple access (CDMA) networks, time division multiple access (TDMA) networks, frequency division multiple access (FDMA) networks, orthogonal FDMA (OFDMA) networks, single-carrier FDMA (SC-FDMA) networks, LTE networks, Global System for Mobile Communications (GSM) networks, 5^{th} Generation (5G) or new radio (NR) networks, as well as other communications networks. As described herein, the terms "networks" and "systems" may be used interchangeably.

An OFDMA network may implement a radio technology such as evolved UTRA (E-UTRA), Institute of Electrical and Electronics Engineers (IEEE) 802.11, IEEE 802.16, IEEE 802.20, flash-OFDM and the like. UTRA, E-UTRA, and GSM are part of universal mobile telecommunication system (UMTS). In particular, long term evolution (LTE) is a release of UMTS that uses E-UTRA. UTRA, E-UTRA, GSM, UMTS and LTE are described in documents provided from an organization named "3rd Generation Partnership Project" (3GPP), and cdma2000 is described in documents from an organization named "3rd Generation Partnership Project 2" (3GPP2). These various radio technologies and standards are known or are being developed. For example, the 3rd Generation Partnership Project (3GPP) is a collaboration between groups of telecommunications associations that aims to define a globally applicable third generation (3G) mobile phone specification. 3GPP long term evolution (LTE) is a 3GPP project which was aimed at improving the UMTS mobile phone standard. The 3GPP may define specifications for the next generation of mobile networks, mobile systems, and mobile devices. The present disclosure is concerned with the evolution of wireless technologies from LTE, 4G, 5G, NR, and beyond with shared access to wireless spectrum between networks using a collection of new and different radio access technologies or radio air interfaces.

In particular, 5G networks contemplate diverse deployments, diverse spectrum, and diverse services and devices that may be implemented using an OFDM-based unified, air interface. In order to achieve these goals, further enhancements to LTE and LTE-A are considered in addition to development of the new radio technology for 5G NR networks. The 5G NR will be capable of scaling to provide coverage (1) to a massive internet of things (IoTs) with a ultra-high density (*e.g.*, ~1M nodes/km²), ultra-low complexity (*e.g.,* ~10s of bits/sec), ultra-low energy (*e.g.,* ~10+ years of battery life), and deep coverage with the capability to reach challenging locations; (2) including mission-critical control with strong security to safeguard sensitive personal, financial, or classified information, ultra-high reliability (*e.g.,* ~99.9999% reliability), ultra-low latency (*e.g.,* ~1 ms), and users with wide ranges of mobility or lack thereof; and (3) with enhanced mobile broadband including extreme high capacity (*e.g.,* ~10 Tbps/km²), extreme data rates (*e.g.,* multi-Gbps rate, 100+ Mbps user experienced rates), and deep awareness with advanced discovery and optimizations.

The 5G NR may be implemented to use optimized OFDM-based waveforms with scalable numerology and transmission time interval (TTI); having a common, flexible framework to efficiently multiplex services and features with a dynamic, low-latency time division duplex (TDD)/frequency division duplex (FDD) design; and with advanced wireless technologies, such as massive multiple input, multiple output (MIMO), robust millimeter wave (mmWave) transmissions, advanced channel coding, and device-centric mobility. Scalability of the numerology in 5G NR, with scaling of subcarrier spacing, may efficiently address operating diverse services across diverse spectrum and diverse deployments. For example, in various outdoor and macro coverage deployments of less than 3GHz FDD/TDD implementations, subcarrier spacing may occur with 15 kHz, for example over 5, 10, 20 MHz, and the like bandwidth (BW). For other various outdoor and small cell coverage deployments of TDD greater than 3 GHz, subcarrier spacing may occur with 30 kHz over 80/100 MHz BW. For other various indoor wideband implementations, using a TDD over the unlicensed portion of the 5 GHz band, the subcarrier spacing may occur with 60 kHz over a 160 MHz BW. Finally, for various deployments transmitting with mmWave components at a TDD of 28 GHz, subcarrier spacing may occur with 120 kHz over a 500 MHz BW.

The scalable numerology of the 5G NR facilitates scalable TTI for diverse latency and quality of service (QoS) requirements. For example, shorter TTI may be used for low latency and high reliability, while longer TTI may be used for higher spectral efficiency. The efficient multiplexing of long and short TTIs to allow transmissions to start on symbol boundaries. 5G NR also contemplates a self-contained integrated subframe design with UL/downlink scheduling information, data, and acknowledgement in the same subframe. The self-contained integrated subframe supports communications in unlicensed or contention-based shared spectrum, adaptive UL/downlink that may be flexibly configured on a per-cell basis to dynamically switch between UL and downlink to meet the current traffic needs.

Various other aspects and features of the disclosure are further described below. It should be apparent that the teachings herein may be embodied in a wide variety of forms and that any specific structure, function, or both being disclosed herein is merely representative and not limiting. Based on the teachings herein one of an ordinary level of skill in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. For example, a method may be implemented as part of a system, device, apparatus, and/or as instructions stored on a computer readable medium for execution on a processor or computer. Furthermore, an aspect may comprise at least one element of a claim.

In a wireless communication network, a base station (BS) and a user equipment (UE) may use hybrid automatic repeat request (HARQ) and transport block (TB) repetition techniques to improve the reliability and quality of a wireless connection. The BS and/or the UE may communicate TB repetitions using different redundancy versions to improve decoding performance. For the purposes of the present disclosure, a TB repetition may refer to one of multiple retransmissions of a TB, or a single TB transmission. Accordingly, if a BS schedules a single transmission of a TB, the transmission may be referred to as a "repetition," even though it is the only transmission. In other words, both a transmission of a TB, and a retransmission of the TB may be referred to as repetitions for the purposes of the present disclosure. When operating over a licensed band, the BS may assign a HARQ process and/or a HARQ redundancy version for transmission in each transmission time occasion. In other words, the BS may provide a mapping or association between HARQ process/redundancy version to scheduled resources in the time-domain.

In some aspects, more than one TB are scheduled with a single scheduling grant, such as a dynamic grant indicated in DCI, a semi-static grant, a configured grant (CG), etc. One or more of the TBs scheduled may have a different quality of service (QoS) requirements or other parameters than the other TBs scheduled in the same scheduling grant. In some aspects of the present disclosure, multi-TB communications with repetitions are scheduled with a single scheduling grant where different TB repetition configurations (e.g., time-domain configurations of repetitions of a TB) can be used for different TBs. Further, in some instances multi-TB communications with repetitions are scheduled in a way that efficiently uses network resources, decreases latency, and/or provides interference diversity for repetitions of the same TB for improved decoding.

The present application describes mechanisms for performing multi-TB communications using TB repetitions. For example, a method for multi-TB repetition may include transmitting a multi-TB repetition configuration indicating one or more numbers of TB repetitions. The one or more numbers of TB repetitions may indicate how many repetitions of one or more TBs in the multi-TB communication may be transmitted or received. The multi-TB repetition configuration may include or indicate a time-domain configuration and/or one or more numbers of repetitions associated with the one or more TBs. The BS may transmit an indication of a time-domain configuration associated with a first TB and/or a second TB. The first and second TB can be associated with the same scheduling grant. For example, the BS may transmit a DCI that schedules at least one transmission/repetition of the first TB and at least one transmission/repetition of the second TB. The DCI may also indicate the time-domain configuration. The time-domain configuration may indicate a mapping type, start and length indicator value (SLIV), or other temporal parameters for the first TB and/or the second TB. In some aspects, the BS may transmit the first number of repetitions of the first TB and the second number of repetitions of the second TB based on the multi-TB repetition configuration and the time-domain configuration indication. In some aspects, the BS may receive from a UE or other device the first number of repetitions of the first TB and the second number of repetitions of the second TB based on the multi-TB repetition configuration and the time-domain configuration indication. The BS, UE, and/or other device may communicate the first and second numbers of repetitions of the first and second TBs sequentially, or interlaced with one another.

The systems, devices, and methods described herein may allow for efficient and/or flexible mechanisms for scheduling and communicating multiple TBs with repetitions using a single scheduling grant. Further, the mechanisms described herein may allow the repetitions of different TBs to be communicated using different time-domain resource allocations and parameters to accommodate different quality of service (QoS) requirements, priorities, or other factors for different TBs. Accordingly, using aspects of the present disclosure the reliability of network communications may be improved and/or optimized for multi-TB communication schemes without sacrificing efficiency.

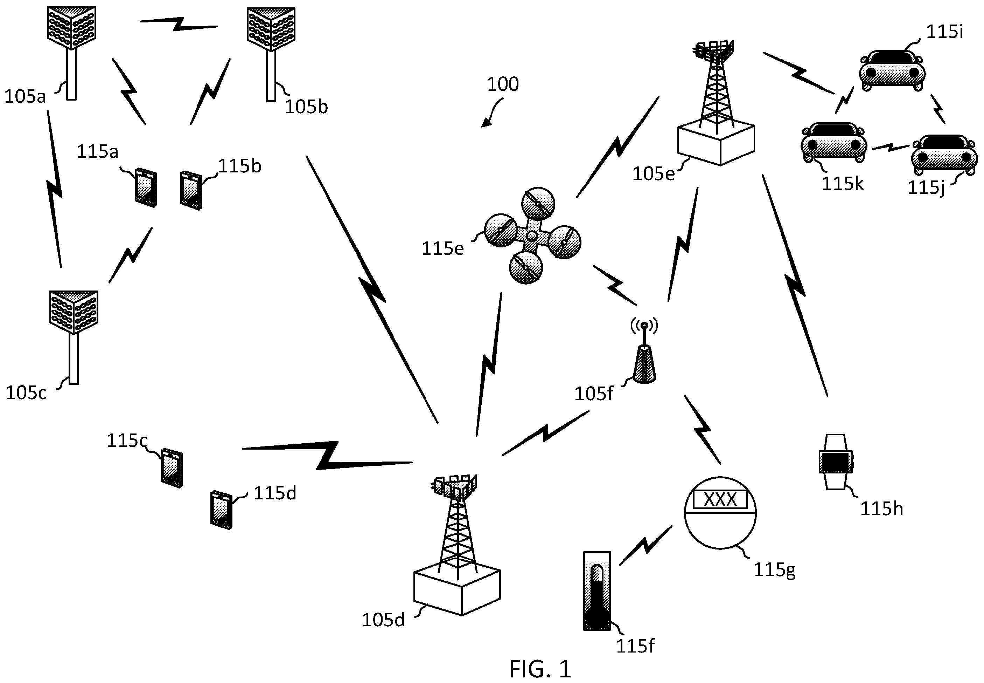

FIG. 1 illustrates a wireless communication network 100 according to some aspects of the present disclosure. The network 100 may be a 5G network. The network 100 includes a number of base stations (BSs) 105 (individually labeled as 105a, 105b, 105c, 105d, 105e, and 105f) and other network entities. A BS 105 may be a station that communicates with UEs 115 and may also be referred to as an evolved node B (eNB), a next generation eNB (gNB), an access point, and the like. Each BS 105 may provide communication coverage for a particular geographic area. In 3GPP, the term "cell" can refer to this particular geographic coverage area of a BS 105 and/or a BS subsystem serving the coverage area, depending on the context in which the term is used.

A BS 105 may provide communication coverage for a macro cell or a small cell, such as a pico cell or a femto cell, and/or other types of cell. A macro cell generally covers a relatively large geographic area (*e.g.*, several kilometers in radius) and may allow unrestricted access by UEs with service subscriptions with the network provider. A small cell, such as a pico cell, would generally cover a relatively smaller geographic area and may allow unrestricted access by UEs with service subscriptions with the network provider. A small cell, such as a femto cell, would also generally cover a relatively small geographic area (*e.g.,* a home) and, in addition to unrestricted access, may also provide restricted access by UEs having an association with the femto cell (*e.g.,* UEs in a closed subscriber group (CSG), UEs for users in the home, and the like). A BS for a macro cell may be referred to as a macro BS. A BS for a small cell may be referred to as a small cell BS, a pico BS, a femto BS or a home BS. In the example shown in FIG. 1, the BSs 105d and 105e may be regular macro BSs, while the BSs 105a-105c may be macro BSs enabled with one of three dimension (3D), full dimension (FD), or massive MIMO. The BSs 105a-105c may take advantage of their higher dimension MIMO capabilities to exploit 3D beamforming in both elevation and azimuth beamforming to increase coverage and capacity. The BS 105f may be a small cell BS which may be a home node or portable access point. A BS 105 may support one or multiple (*e.g.*, two, three, four, and the like) cells.

The network 100 may support synchronous or asynchronous operation. For synchronous operation, the BSs may have similar frame timing, and transmissions from different BSs may be approximately aligned in time. For asynchronous operation, the BSs may have different frame timing, and transmissions from different BSs may not be aligned in time.

The UEs 115 are dispersed throughout the wireless network 100, and each UE 115 may be stationary or mobile. A UE 115 may also be referred to as a terminal, a mobile station, a subscriber unit, a station, or the like. A UE 115 may be a cellular phone, a personal digital assistant (PDA), a wireless modem, a wireless communication device, a handheld device, a tablet computer, a laptop computer, a cordless phone, a wireless local loop (WLL) station, or the like. In one aspect, a UE 115 may be a device that includes a Universal Integrated Circuit Card (UICC). In another aspect, a UE may be a device that does not include a UICC. In some aspects, the UEs 115 that do not include UICCs may also be referred to as IoT devices or internet of everything (IoE) devices. The UEs 115a-115d are examples of mobile smart phone-type devices accessing network 100. A UE 115 may also be a machine specifically configured for connected communication, including machine type communication (MTC), enhanced MTC (eMTC), narrowband IoT (NB-IoT) and the like. The UEs 115e-115h are examples of various machines configured for communication that access the network 100. The UEs 115i-115k are examples of vehicles equipped with wireless communication devices configured for communication that access the network 100. A UE 115 may be able to communicate with any type of the BSs, whether macro BS, small cell, or the like. In FIG. 1, a lightning bolt (*e.g.*, communication links) indicates wireless transmissions between a UE 115 and a serving BS 105, which is a BS designated to serve the UE 115 on the downlink (DL) and/or uplink (UL), desired transmission between BSs 105, backhaul transmissions between BSs, or sidelink transmissions between UEs 115.

In operation, the BSs 105a-105c may serve the UEs 115a and 115b using 3D beamforming and coordinated spatial techniques, such as coordinated multipoint (CoMP) or multi-connectivity. The macro BS 105d may perform backhaul communications with the BSs 105a-105c, as well as small cell, the BS 105f. The macro BS 105d may also transmits multicast services which are subscribed to and received by the UEs 115c and 115d. Such multicast services may include mobile television or stream video, or may include other services for providing community information, such as weather emergencies or alerts, such as Amber alerts or gray alerts.

The BSs 105 may also communicate with a core network. The core network may provide user authentication, access authorization, tracking, Internet Protocol (IP) connectivity, and other access, routing, or mobility functions. At least some of the BSs 105 (*e.g.,* which may be an example of a gNB or an access node controller (ANC)) may interface with the core network through backhaul links (*e.g.,* NG-C, NG-U, *etc.*) and may perform radio configuration and scheduling for communication with the UEs 115. In various examples, the BSs 105 may communicate, either directly or indirectly (*e.g.,* through core network), with each other over backhaul links (*e.g.,* X1, X2, *etc.*)*,* which may be wired or wireless communication links.

The network 100 may also support mission critical communications with ultra-reliable and redundant links for mission critical devices, such as the UE 115e, which may be a drone. Redundant communication links with the UE 115e may include links from the macro BSs 105d and 105e, as well as links from the small cell BS 105f. Other machine type devices, such as the UE 115f (*e.g.,* a thermometer), the UE 115g (*e.g.,* smart meter), and UE 115h (*e.g.,* wearable device) may communicate through the network 100 either directly with BSs, such as the small cell BS 105f, and the macro BS 105e, or in multi-step-size configurations by communicating with another user device which relays its information to the network, such as the UE 115f communicating temperature measurement information to the smart meter, the UE 115g, which is then reported to the network through the small cell BS 105f. The network 100 may also provide additional network efficiency through dynamic, low-latency TDD/FDD communications, such asV2V, V2X, C-V2X communications between a UE 115i, 115j, or 115k and other UEs 115, and/or vehicle-to-infrastructure (V2I) communications between a UE 115i, 115j, or 115k and a BS 105.

In some implementations, the network 100 utilizes OFDM-based waveforms for communications. An OFDM-based system may partition the system BW into multiple (K) orthogonal subcarriers, which are also commonly referred to as subcarriers, tones, bins, or the like. Each subcarrier may be modulated with data. In some instances, the subcarrier spacing between adjacent subcarriers may be fixed, and the total number of subcarriers (K) may be dependent on the system BW. The system BW may also be partitioned into subbands. In other instances, the subcarrier spacing and/or the duration of TTIs may be scalable.

In some aspects, the BSs 105 can assign or schedule transmission resources (*e.g*., in the form of time-frequency resource blocks (RB)) for downlink (DL) and uplink (UL) transmissions in the network 100. DL refers to the transmission direction from a BS 105 to a UE 115, whereas UL refers to the transmission direction from a UE 115 to a BS 105. The communication can be in the form of radio frames. A radio frame may be divided into a plurality of subframes or slots, for example, about 10. Each slot may be further divided into mini-slots. In a FDD mode, simultaneous UL and DL transmissions may occur in different frequency bands. For example, each subframe includes a UL subframe in a UL frequency band and a DL subframe in a DL frequency band. In a TDD mode, UL and DL transmissions occur at different time periods using the same frequency band. For example, a subset of the subframes (*e.g*., DL subframes) in a radio frame may be used for DL transmissions and another subset of the subframes (*e.g*., UL subframes) in the radio frame may be used for UL transmissions.

The DL subframes and the UL subframes can be further divided into several regions. For example, each DL or UL subframe may have pre-defined regions for transmissions of reference signals, control information, and data. Reference signals are predetermined signals that facilitate the communications between the BSs 105 and the UEs 115. For example, a reference signal can have a particular pilot pattern or structure, where pilot tones may span across an operational BW or frequency band, each positioned at a pre-defined time and a pre-defined frequency. For example, a BS 105 may transmit cell specific reference signals (CRSs) and/or channel state information - reference signals (CSI-RSs) to enable a UE 115 to estimate a DL channel. Similarly, a UE 115 may transmit sounding reference signals (SRSs) to enable a BS 105 to estimate a UL channel. Control information may include resource assignments and protocol controls. Data may include protocol data and/or operational data. In some aspects, the BSs 105 and the UEs 115 may communicate using self-contained subframes. A self-contained subframe may include a portion for DL communication and a portion for UL communication. A self-contained subframe can be DL-centric or UL-centric. A DL-centric subframe may include a longer duration for DL communication than for UL communication. A UL-centric subframe may include a longer duration for UL communication than for UL communication.

In some aspects, the network 100 may be an NR network deployed over a licensed spectrum. The BSs 105 can transmit synchronization signals (*e.g*., including a primary synchronization signal (PSS) and a secondary synchronization signal (SSS)) in the network 100 to facilitate synchronization. The BSs 105 can broadcast system information associated with the network 100 (*e.g.*, including a master information block (MIB), remaining system information (RMSI), and other system information (OSI)) to facilitate initial network access. In some instances, the BSs 105 may broadcast the PSS, the SSS, and/or the MIB in the form of synchronization signal block (SSBs) over a physical broadcast channel (PBCH) and may broadcast the RMSI and/or the OSI over a physical downlink shared channel (PDSCH).

In some aspects, a UE 115 attempting to access the network 100 may perform an initial cell search by detecting a PSS from a BS 105. The PSS may enable synchronization of period timing and may indicate a physical layer identity value. The UE 115 may then receive a SSS. The SSS may enable radio frame synchronization, and may provide a cell identity value, which may be combined with the physical layer identity value to identify the cell. The PSS and the SSS may be located in a central portion of a carrier or any suitable frequencies within the carrier.

After receiving the PSS and SSS, the UE 115 may receive a MIB. The MIB may include system information for initial network access and scheduling information for RMSI and/or OSI. After decoding the MIB, the UE 115 may receive RMSI and/or OSI. The RMSI and/or OSI may include radio resource control (RRC) information related to random access channel (RACH) procedures, paging, control resource set (CORESET) for physical downlink control channel (PDCCH) monitoring, physical UL control channel (PUCCH), physical UL shared channel (PUSCH), power control, and SRS.

After obtaining the MIB, the RMSI and/or the OSI, the UE 115 can perform a random access procedure to establish a connection with the BS 105. In some examples, the random access procedure may be a four-step random access procedure. For example, the UE 115 may transmit a random access preamble and the BS 105 may respond with a random access response. The random access response (RAR) may include a detected random access preamble identifier (ID) corresponding to the random access preamble, timing advance (TA) information, a UL grant, a temporary cell-radio network temporary identifier (C-RNTI), and/or a backoff indicator. Upon receiving the random access response, the UE 115 may transmit a connection request to the BS 105 and the BS 105 may respond with a connection response. The connection response may indicate a contention resolution. In some examples, the random access preamble, the RAR, the connection request, and the connection response can be referred to as message 1 (MSG1), message 2 (MSG2), message 3 (MSG3), and message 4 (MSG4), respectively. In some examples, the random access procedure may be a two-step random access procedure, where the UE 115 may transmit a random access preamble and a connection request in a single transmission and the BS 105 may respond by transmitting a random access response and a connection response in a single transmission.

After establishing a connection, the UE 115 and the BS 105 can enter a normal operation stage, where operational data may be exchanged. For example, the BS 105 may schedule the UE 115 for UL and/or DL communications. The BS 105 may transmit UL and/or DL scheduling grants to the UE 115 via a PDCCH. The scheduling grants may be transmitted in the form of DL control information (DCI). The BS 105 may transmit a DL communication signal (*e.g*., carrying data) to the UE 115 via a PDSCH according to a DL scheduling grant. The UE 115 may transmit a UL communication signal to the BS 105 via a PUSCH and/or PUCCH according to a UL scheduling grant.

In some aspects, the network 100 may operate over a system BW or a component carrier (CC) BW. The network 100 may partition the system BW into multiple BWPs (*e.g*., portions). A BS 105 may dynamically assign a UE 115 to operate over a certain BWP (*e.g.,* a certain portion of the system BW). The assigned BWP may be referred to as the active BWP. The UE 115 may monitor the active BWP for signaling information from the BS 105. The BS 105 may schedule the UE 115 for UL or DL communications in the active BWP. In some aspects, a BS 105 may assign a pair of BWPs within the CC to a UE 115 for UL and DL communications. For example, the BWP pair may include one BWP for UL communications and one BWP for DL communications.

In some aspects, the network 100 may operate over a shared channel, which may include shared frequency bands and/or unlicensed frequency bands. For example, the network 100 may be an NR-U network operating over an unlicensed frequency band. In such an aspect, the BSs 105 and the UEs 115 may be operated by multiple network operating entities. To avoid collisions, the BSs 105 and the UEs 115 may employ a listen-before-talk (LBT) procedure to monitor for transmission opportunities (TXOPs) in the shared channel. A TXOP may also be referred to as channel occupancy time (COT). For example, a transmitting node (e.g., a BS 105 or a UE 115) may perform an LBT prior to transmitting in the channel. When the LBT passes, the transmitting node may proceed with the transmission. When the LBT fails, the transmitting node may refrain from transmitting in the channel.

An LBT can be based on energy detection (ED) or signal detection. For an energy detection-based LBT, the LBT results in a pass when signal energy measured from the channel is below a threshold. Conversely, the LBT results in a failure when signal energy measured from the channel exceeds the threshold. An LBT may include one, two, or more clear channel assessments (CCAs) performed during successive time periods. For a signal detection-based LBT, the LBT results in a pass when a channel reservation signal (e.g., a predetermined preamble signal) is not detected in the channel. Additionally, an LBT may be in a variety of modes. An LBT mode may be, for example, a category 4 (CAT4) LBT, a category 2 (CAT2) LBT, or a category 1 (CAT1) LBT. A CAT1 LBT is referred to a no LBT mode, where no LBT is to be performed prior to a transmission. A CAT2 LBT refers to an LBT without a random back-off period. For instance, a transmitting node may determine a channel measurement in a time interval and determine whether the channel is available or not based on a comparison of the channel measurement against a ED threshold. A CAT4 LBT refers to an LBT with a random back-off and a variable contention window (CW). For instance, a transmitting node may draw a random number and back-off for a duration based on the drawn random number in a certain time unit.

In some aspects, a BS 105 may transmit, or receive, multiple transport blocks (TBs) based on a single scheduling grant. For example, the BS 105 may transmit DCI scheduling a first TB and a second TB. Further, the BS 105 may perform multiple transmissions, or repetitions, of a TB to provide increased reliability and quality of service (QoS). The BS 105 may transmit or indicate a TB repetition configuration, which may include a repetition type for each TB and/or each physical shared channel (e.g., PUSCH, PDSCH). In repetition type-A, the BS 105 and/or UE 115 is configured to communicate a single TB repetition per slot. In repetition type-B, the BS 105 and/or UE 115 is configured to communicate multiple TB repetitions per slot. As such, type-B repetition may be suitable for ultra-reliable, low-latency communication (URLLC) applications. In repetition type-B, a time-domain resource assignment (TDRA) field may be provided in a DCI or in a CG configuration, which identifies the time/frequency resources for a first TB repetition.

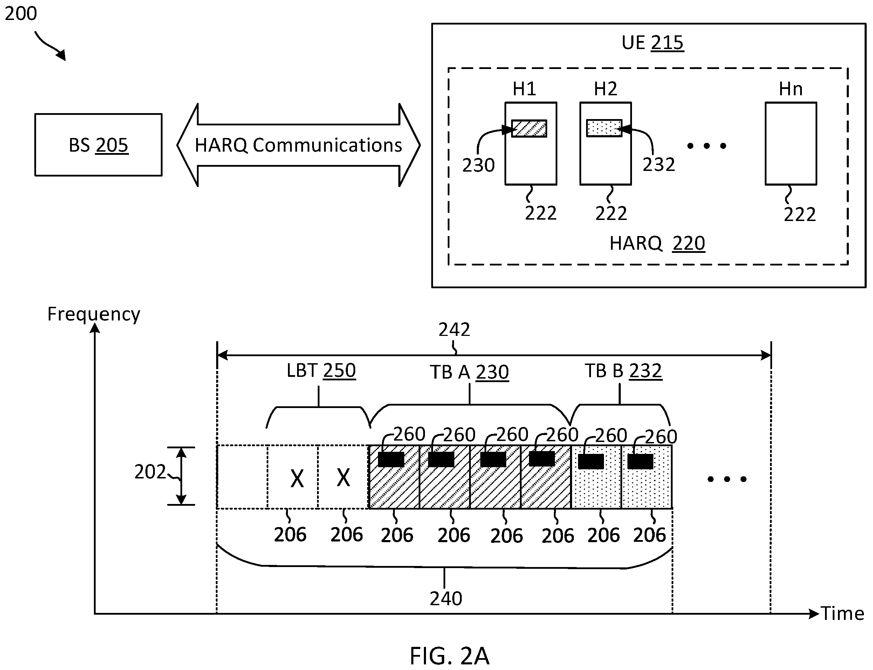

FIG. 2A illustrates a hybrid automatic repeat request (HARQ) communication scenario according to some aspects of the present disclosure. The scenario 200 may correspond to a HARQ communication scenario in the network 100 when the network 100 operates over a shared frequency band or an unlicensed frequency band. In FIG. 2A, the x-axis represents time in some constant units. In the scenario 200, a BS 205 similar to the BSs 105 may communicate data with a UE 215 similar to the UEs 115 using HARQ over a frequency band 202, which may be a licensed frequency band or a shared radio frequency band in a shared spectrum or an unlicensed spectrum, shared by multiple network operating entities. The frequency band 202 may be located at any suitable frequencies. In some aspects, the frequency band 202 may be located at about 3.5 GHz, 6 GHz, or 30 GHz.

For HARQ communications, a transmitting node (*e.g.,* the UE 215) may transmit data (*e.g.,* in the form of a TB) to a receiving node (*e.g.,* the BS 205). The receiving node may provide the transmitting node with a feedback on the reception status of the data. For example, the receiving node may transmit an ACK to the transmitting node to indicate a successful decoding of the data. Conversely, the receiving node may transmit a NACK to the transmitting node to indicate a decoding failure for the data. When the transmitting node receives an ACK from the receiving node, the transmitting node may transmit new data in a subsequent transmission. However, when the transmitting node receives a NACK from the receiving node, the transmitting node may retransmit the same data to the receiving node. In some instances, the transmitting node may use the same encoding version for the initial transmission and the retransmission. In some other instances, the transmitting node may use different encoding versions for the initial transmission and the retransmission. The encoding versions may be referred to as redundancy versions. Different redundancy versions may include different combinations of systematic data information bits and error correction bit. In some aspects, the receiving node may perform soft-combining to decode the data based on the initial transmission and the retransmission. For simplicity of discussion and illustration, FIG. 2A illustrates the HARQ communication in the context of UL data communications, though similar HARQ mechanisms may be applied to DL data communications.

As an example, the UE 215 includes a HARQ component 220. The HARQ component 220 is configured to perform multiple parallel HARQ processes 222 for UL data communications. The HARQ processes 222 may operate independent of each other. In other words, the ACKs, NACKs, and/or retransmissions are determined and processed separately for each HARQ process 222 at the BS 205 and at the UE 215. Each HARQ process 222 may be identified by a HARQ process identifier (ID). For example, the HARQ processes 222 may be identified by identifiers H1, H2, ... Hn. Each HARQ process 222 may have one or more TBs ready for transmission. In the illustrated example of FIG. 2A, the HARQ process H1 222 has one TB 230 ready for transmission and the HARQ process H2 222 has one TB 232 ready for transmission. The BS 205 may configure the UE 215 with configured resources for autonomous or unscheduled transmission. The UE 215 may transmit the TB 230 and the TB 232 to the BS 205 using a configured resource.

In some aspects, the BS 205 may configure the UE 215 with a configured resource 240. The configured resource 240 may be periodic. For instance, the configured resource 240 may be repeated at a time interval 242. The configured resource 240 may be partitioned into a plurality transmission time periods or slots 206. Each slot 206 may include any suitable number of OFDM symbols depending on the transmission configurations or numerology (*e.g.*, the subcarrier spacing (SCS) and/or the cyclic prefix (CP) mode) in use.

The UE 215 may perform an LBT 250 in the frequency band 202 prior to a transmission. As an example, a first LBT 250 attempt for a transmission in a second slot 206 within the configured resource 240 failed (shown by the cross symbol). A second LBT 250 attempt for a transmission in a third slot 206 within the configured resource 240 also failed (shown by the cross symbol). A third LBT attempt for a transmission in a fourth slot 206 within the configured resource 240 is a pass. Thus, the UE 215 may initiate a transmission beginning at the fourth slot 206. Once the UE 215 won a contention (*e.g.*, passing the LBT 250), the UE 215 may use the configured resource for a number of consecutive HARQ transmissions.

In the illustrated example of FIG. 2A, after passing the LBT 250, the UE 215 transmits four repetitions of the TB 230, denoted as TB A, followed by two repetitions of the TB 232, denoted as TB B, in consecutive slots 206. In some aspects, the UE 215 may transmit the repetitions for the TB 230 using different redundancy versions and/or the same redundancy versions. In some instances, each repetition may use a different RVN. In some instances, all repetitions may use the same RVN. In some instances, at least two repetitions may use the same RVN. Similarly, the UE 215 may transmit the repetitions for the TB 232 using different redundancy versions and/or the same redundancy versions. In some aspects, the UE 215 may include a RVN and/or a HARQ ID for each transmission, for example, in uplink control information (UCI) 260. For instance, the RVN may indicate a RV0, a RV1, a RV2, a RV3, a RV4, and so on. Each transmission for the TB A 230 may include UCI 260 indicating a HARQ ID H1. Similarly, each transmission for the TB B 232 may include UCI 260 indicating a HARQ ID H2. The UE 215 may further indicate whether a transmission is an initial transmission or a retransmission by including a new data indicator (NDI) in the UCI 260. For example, the NDI may be set to a value of 1 to indicate that a corresponding transmission is an initial transmission and may be set to a value of 0 to indicate that a corresponding transmission is a retransmission. For instance, the UCI 260 for each transmission of the TB A 230 may include a NDI with a value of 1 to indicate that the repetitions of the TB A 230 are associated with an in initial transmissions of the TB A 230. The UCI 260 for each transmission of the TB B 232 may include a NDI with a value of 0 to indicate that the repetitions of the TB B 232 are associated with a retransmission of the TB B 232. In some aspects, the UE 215 may determine a RV sequence (*e.g.,* a sequence of RVNs) for transmitting one or more redundancy versions of a TB in a configured resource and/or how to prioritize transmission of one TB of a certain HARQ process 222 over another TB of another HARQ process 222 without assistance from the BS 205. In some other instances, the BS 205 may provide the UE with some assistance in the RV sequence determination and/or HARQ ID selection.

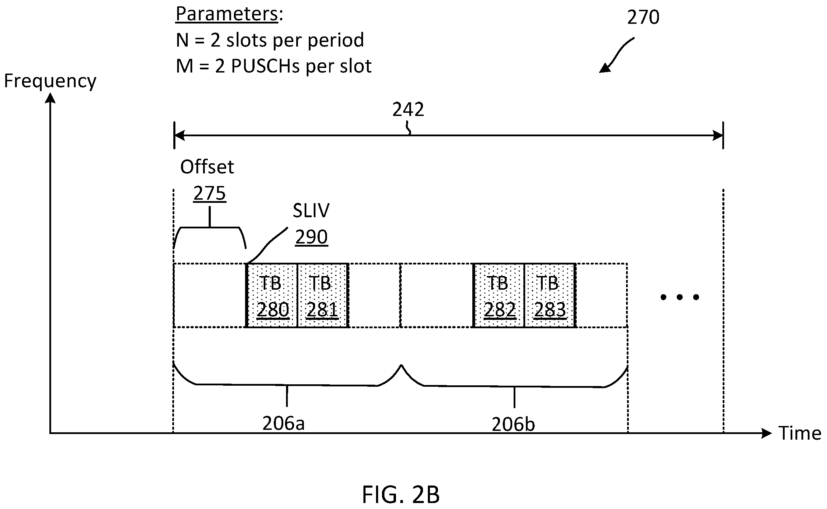

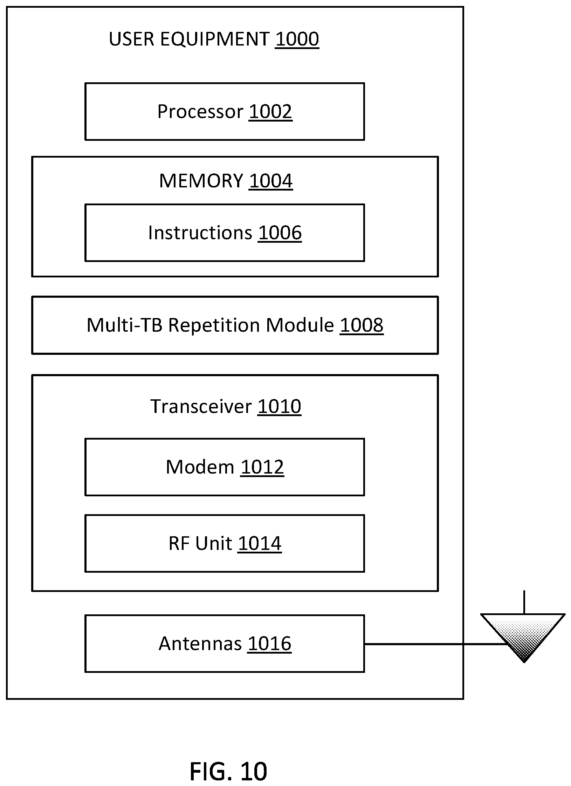

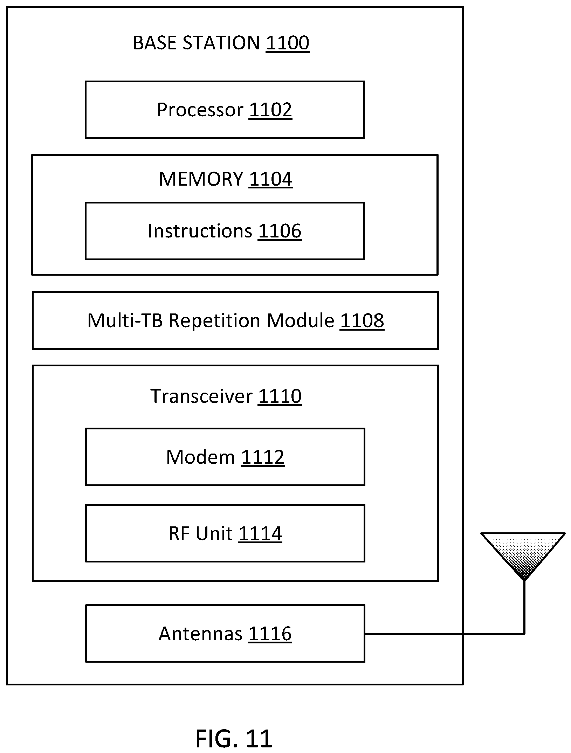

FIG. 2B illustrates a hybrid automatic repeat request (HARQ) communication scenario according to some aspects of the present disclosure. The functionality of scheme 270 can be executed by a computing device (*e.g.,* a processor, processing circuit, and/or other suitable component) of a wireless communication device or other suitable means. In some aspects, a wireless communication device such as the UE 115 or UE 1000 of FIG. 10 may utilize one or more components, such as the processor 1002, the memory 1004, the Multi-TB Repetition Module 1008, the transceiver 1010, the modem 1012, and the one or more antennas 1016, to execute the steps of scheme 270. Further, a wireless communication device such as the base station (BS) 105 or BS 1100 of FIG. 11 may utilize one or more components, such as the processor 1102, the memory 1104, the Multi-TB Repetition Module 1108, the transceiver 1110, the modem 1112, and the one or more antennas 1116, to execute the steps of scheme 270. The scheme 270 may employ similar mechanisms as described in FIGS. 1-2A. In FIG. 2B, the x-axis represents time in some arbitrary units, and the y-axis represents frequency in some arbitrary units.

As illustrated in FIG. 2B, TBs 280, 281, 282, and 283 may be transmitted in more than one slot 206a and 206b of a configured grant resource 242. For instance, TBs may be transmitted in a number N slots per period. More than one TB may be transmitted in each of the multiple slots of the configured grant resource. For instance, TBs may be transmitted in a number M PUSCHs per slot. The BS may configure a number of HARQ processes Y (or nrofHARQ-Processes) associated with the PUSCHs of the configured grant resource 242. The configured grant resource 242 may be in a licensed or unlicensed frequency band or spectrum.

A BS may provide a UE with an information element or parameter(s) including a start and length indicator value (SLIV) 290 for a first PUSCH (time-domain allocation) in a slot, where a SLIV indicates the starting position in terms of the current symbol or a symbol index and the length of the PUSCH. The PUSCH starting position and length may repeat over each of the plurality of slots associated with the configured grant resources. For instance, SLIV 290 indicates the position of the first PUSCH of the first slot 206a of the configured grant resource 242. The position of the first PUSCH of the first slot may be offset 275 from the beginning of the configured grant resource 242. The SLIV 290 may also indicate a length or number of symbols for each PUSCH.

Although the examples described in FIGS. 2A and 2B are described with respect to UL communications transmitted in PUSCH, it will be understood that the schemes and mechanisms described herein also apply to DL communications transmitted in PDSCH. In some aspects, communicating the TBs 280, 281, 282, and 283 comprises transmitting, by a first wireless communication device (*e.g.,* BS 105, UE 115), a TB on a PDSCH/PUSCH associated with the starting HARQ process ID. In some instances, communicating a TB comprises receiving, by a first wireless communication device (*e.g.,* UE 115, BS 105), a TB on a PUSCH/PDSCH associated with a starting HARQ process ID.

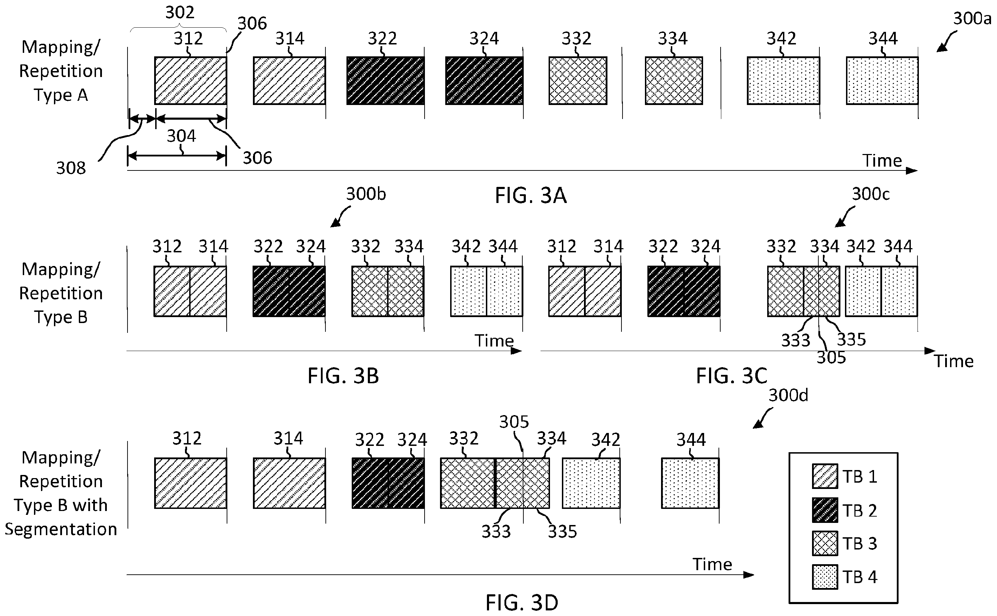

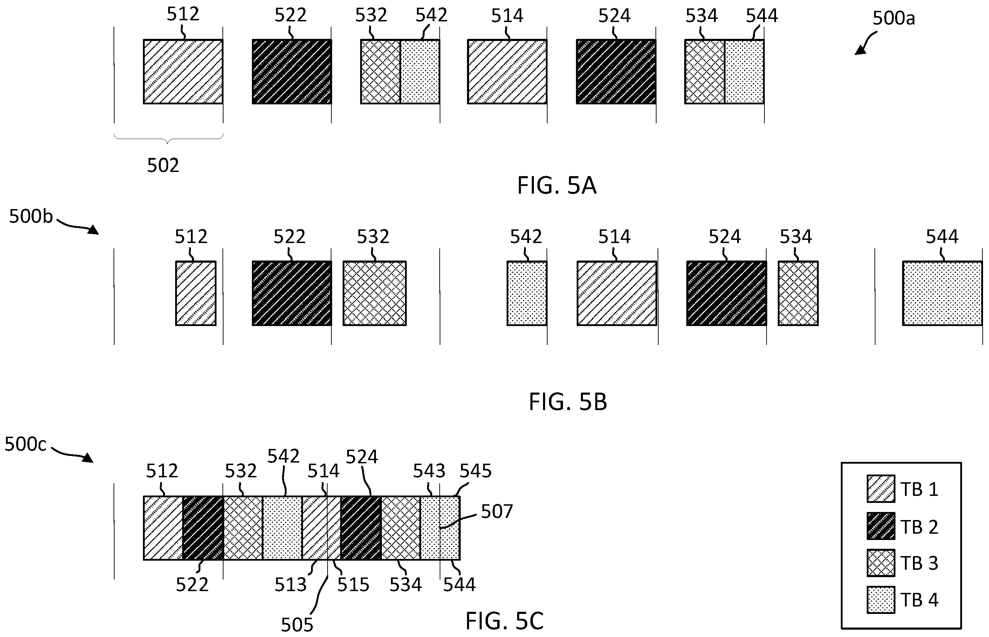

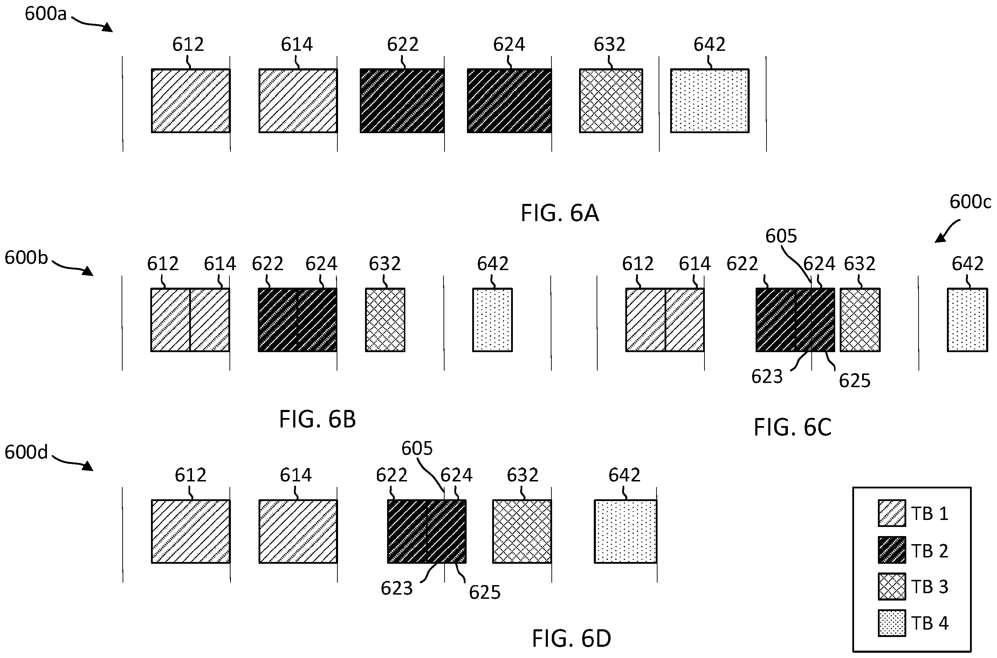

In some aspects, a UE may transmit more than one TB and with repetitions. Further, it may be advantageous to allow a UE to allow for different time-domain and repetition configurations for each TB transmitted in a scheduling grant. Accordingly, FIGS. 3A - 7B describe various mechanisms for multi-TB repetitions and indication. More specifically, FIGS. 3A-4B illustrate mechanisms for multi-TB repetition in which the repetitions of each TB are transmitted sequentially. That is, the repetitions of a first TB are transmitted, and the repetitions of a second TB are transmitted after all the repetitions of the first TB are transmitted. FIGS. 5A-5C illustrate a multi-TB repetition scheme in which the repetitions of a first TB are interlaced with the repetitions of a second TB. FIGS. 6A-7B illustrate multi-TB repetition schemes in which different numbers of repetitions can be communicated for each TB.

According to aspects of the present disclosure, multiple TBs associated with different PDSCHs or PUSCHs can be communicated in a single scheduling grant (e.g., dynamic grant, semi-static grant). Multi-TB communications may also be referred to as multi-PDSCH or multi-PUSCH communications. Further, because the mechanisms may apply to TB communication in the UL, DL, or SL, the multi-TB communications and configurations described herein may be referred to as multi-PXSCH communications and configurations, where PXSCH refers to either PDSCH, PUSCH, or PSSCH. Further, although the methods and schemes described below may be discussed in the context of DL TB communication and/or UL TB communications, it will be understood that the mechanisms described herein may be used for DL, UL and/or SL communications of TBs. For example, a BS may transmit a multi-TB communication repetition based on a multi-TB repetition configuration, and the UE may receive and decode the multi-TB communication based on a multi-TB time-domain configuration indicated by the BS. Alternatively, or additionally, the UE may transmit one or more TBs to the BS based on the multi-TB time-domain configuration indicated by the BS.

FIGS. 3A-3D illustrate multi-TB communication schemes 300a, 300b, 300c, 300d according to some aspects of the present disclosure. In FIGS. 3A-3D, the x-axis represents time in some constant units. In the schemes 300a, 300b, 300c,300d a BS similar to the BSs 105 may communicate one or more repetitions of a plurality of TBs. The BS and UE may communicate at any suitable frequencies. In some aspects, the BS and the UE may communicate at frequencies of about 3.5 GHz, 6 GHz, 30 GHz or beyond 52.6GHz, etc. In the schemes 300a, 300b, 300c, 300d, the BS communicates a plurality of TB repetitions for a plurality of TBs based on a same number of repetitions, and with the repetitions of different TBs communicated sequentially. The time mapping of the TB repetitions may be based on a mapping type associated with a first repetition of each TB or based on a repetition type configuration. The UE may utilize one or more components of the UE 1000 illustrated in FIG. 10, for example, such as the processor 1002, the memory 1004, the Multi-TB Repetition Module 1008, the transceiver 1010, the modem 1012, and the one or more antennas 1016, to execute the steps of schemes 300a, 300b, 300c, and 300d. Further, the BS may utilize one or more of the components of the BS 1100 shown in FIG. 11, such as the processor 1102, the memory 1104, the Multi-TB Repetition Module 1108, the transceiver 1110, the modem 1112, and the one or more antennas 1116, to execute the steps of schemes 300a, 300b, 300c, and 300d.

Referring to FIG. 3A, the scheme 300a includes communicating, in the CG resource, a UL communication including a plurality of TB repetitions 312, 314, 322, 324, 332, 334, 342, 344 corresponding to a plurality of TBs (TB 1, TB 2, TB 3, TB4). The TB repetitions may be configured and transmitted according to a type-A repetition or type-A mapping, wherein multiple each TB repetition is transmitted within a slot, such as the first slot 302. For example, the UE transmits the TB repetition 312 in the first slot 302, the TB repetition 314 in a second slot, the TB repetition 322 in a third slot, and so on. Each repetition may be transmitted based on a starting symbol or position 308, and a length 306. The TB repetitions are transmitted sequentially in the scheme 300a. In other words, the TB repetitions of each TB are transmitted together, following the TB repetitions of the previous TB. Accordingly, the TB repetitions 312, 314 associated with TB 1 are transmitted, followed by the TB repetitions 322, 324 associated with TB 2, followed by the TB repetitions 332, 334 associated with TB 3, and so on. As explained further below, the time mapping of the TB repetitions may be based on a multi-TB repetition configuration, and one or more time-domain resource allocations or indications. For example, the time mapping of the TB repetitions may be based on a number of repetitions configured via RRC, or configured via RRC and indicated by DCI. The parameters of the time-domain configuration may include any of start and length indicator values (SLIVs), mapping type, repetition type or number of repetitions.

In the scheme 300a, the repetitions of each TB are mapped to the time-domain based on the mapping type or repetition type indicated for the first repetition of each TB. Accordingly, the BS may indicate a first SLIV and mapping type A for the first repetition 312 of the first TB. The remaining repetition 314 of the first TB is mapped to the time-domain resource based on the mapping type A, such that the second repetition 314 uses the same SLIV and mapping type as the first repetition. The BS and UE may follow this configuration or rule for the other repetitions (e.g., 322, 324, 332, 334) of the other TBs as well. In the illustrated example, the BS and the UE are configured to communicate a same number of repetitions for all TBs associated with the same scheduling grant. In particular, the BS and the UE are configured to communicate two repetitions (N=2) for each TB. Further, in the illustrated example, the BS and the UE are configured to communicate 4 TBs in the scheduled resource. Thus, a total of 8 repetitions may be communicated in the scheduled grant, or configured grant. However, it will be understood that these values are exemplary and that any suitable value may be used for the number of repetitions and/or for the TB.

In the scheme 300b shown in FIG. 3B, the repetitions are mapped to the time-domain resource based on a mapping type B or repetition type B. In this example, the BS or the UE may be configured to map and communicate repetitions of each TB such that the second repetitions of each TB are appended to the first repetitions of each TB back-to-back, and communicated in the same slots as the first repetitions of each TB. Accordingly, the BS and/or the UE communicate the second repetitions (and any following repetitions) of each TB using the same length as the first respective repetitions. Thus, the second repetition 314 of the first TB has a same length as the first repetition 312, but is transmitted within the same slot such that the second repetition 314 uses a different starting symbol than the first repetition 312. Further, in the scheme 300c in FIG.3C, the BS and/or the UE may be configured to segment repetitions that overlap or cross a slot boundary. In this regard, it can be seen that the repetition 334, which is the second repetition of the third TB, overlaps the slot boundary 305. The BS and/or the UE may be configured to segment the repetition 334, which may be referred to as a nominal repetition, into two partial repetitions 333, 335. In some aspects, the partial repetitions 333, 335 may be referred to as actual repetitions.

In the scheme 300d, the repetitions are mapped to the time-domain resource based on the mapping type or repetition type indicated for the first repetition of the corresponding TB, similar to the schemes 300a, 300b shown above, but with different mapping types or repetition types used for different TBs. In this regard, the first TB and fourth TB may be configured based on mapping type A or repetition type A. The second TB and third TB may be configured based on mapping type B or repetition type B. Thus, the repetitions 312, 314 of the first TB are communicated in different slots, while the repetitions 322, 324 of the second TB are communicated in a same slot. Further, in the scheme 300c, the BS and/or the UE may be configured to segment repetitions that overlap or cross a slot boundary. In this regard, it can be seen that the repetition 334, which is the second repetition of the third TB, overlaps the slot boundary 305. The BS and/or the UE may be configured to segment the repetition 334, which may be referred to as a nominal repetition, into two partial repetitions 333, 335. In some aspects, the partial repetitions 333, 335 may be referred to as actual repetitions.

In some aspects, the schemes 300 may allow for multi-TB communications with repetitions, and using existing system configurations and parameters. For example, in some aspects, a BS may use a TDRA table for multi-PXSCH scheduling to indicate a time-domain configuration, which the UE may use to decode the multi-TB communication even when the time-domain resources for each TB repetition are not explicitly indicated by the BS. Further, in some aspects, communicating the repetitions of each TB sequentially may allow for lower latency in situations where lower latency is desired or required. For example, if all repetitions of the first TB are transmitted before the repetitions of any other TB, a UE may successfully decode the first TB sooner than if the TBs were communicated cyclically or interlaced with repetitions of other TBs. Cyclical communication of repetitions that are interlaced with repetitions of other TBs will be discussed further below.

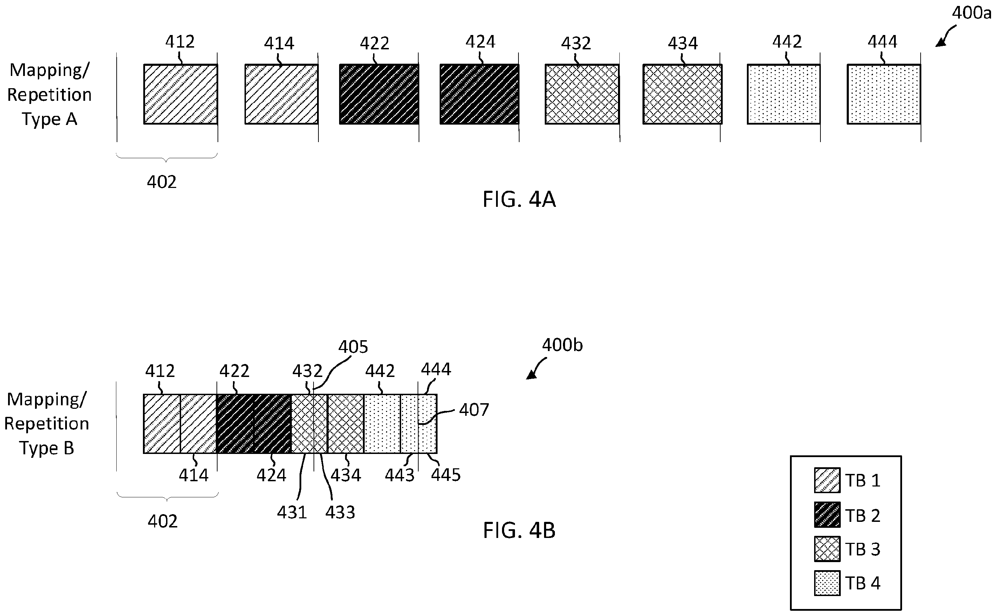

FIGS. 4A and 4B illustrate multi-TB communication schemes 400a, 400b, according to some aspects of the present disclosure. In FIGS. 4A and 4B, the x-axis represents time in some constant units. In the schemes 400a, 400b, a BS similar to the BSs 105 may communicate one or more repetitions of a plurality of TBs. The BS and UE may communicate at any suitable frequencies. In some aspects, the BS and the UE may communicate at frequencies of about 3.5 GHz, 6 GHz, 30 GHz, or beyond 52.6GHz, etc. In the schemes 400a, 400b, the BS communicates a plurality of repetitions for a plurality of TBs based on a same number of repetitions, and with the repetitions of different TBs communicated sequentially. The time mapping of the repetitions may be based on a mapping type associated with a first repetition of the first TB or based on a repetition type configuration. Thus, the repetitions of the second TB may be mapped to the time-domain resources based on the first repetition of the first TB, rather than the first repetition of the second TB. Accordingly, the BS may indicate a time-domain configuration with one set of time-domain resource allocation parameters (e.g., SLIV, mapping type, length), and the UE may decode the multi-TB communication with repetitions based on the single set of time-domain resource allocation parameters. The UE may utilize one or more components of the UE 1000 illustrated in FIG. 10, for example, such as the processor 1002, the memory 1004, the Multi-TB Repetition Module 1008, the transceiver 1010, the modem 1012, and the one or more antennas 1016, to execute the steps of schemes 400a, and 400b. Further, the BS may utilize one or more of the components of the BS 1100 shown in FIG. 11, such as the processor 1102, the memory 1104, the Multi-TB Repetition Module 1108, the transceiver 1110, the modem 1112, and the one or more antennas 1116, to execute the steps of schemes 400a, and 400b.

In the scheme 400a shown in FIG. 4A, the first repetition 412 of the first TB may be associated with mapping type A, and a first SLIV and/or repetition type A is configured. Accordingly, the BS and/or the UE are configured to map the remaining repetitions (414, 422, 424, 432, 434, 442, 444) based on a mapping type A or repetition type A, and the first SLIV. The repetitions are grouped by TB and communicated sequentially such that the repetitions of the second TB are communicated after all repetitions of the first TB have been communicated.

In the scheme 400b shown in FIG. 4B, the first repetition 412 of the first TB is associated with a mapping type B, a second SLIV, and a length (which is obtained from the second SLIV) and/ or a repetition type B is configured. Accordingly, the BS and/or the UE are configured to map the remaining repetitions based on mapping type B or repetition type B, and the length of the first repetition 412. In this regard, as similarly shown above in the scheme 300b, all repetitions following the first repetition 412 are appended to the end of each proceeding repetition back-to-back, and have the same length as the first repetition 412. As shown, there may be one or more repetitions that overlap slot boundaries. For example, the repetition 432 overlaps a first slot boundary 405, and the repetition 444 overlaps a second slot boundary 407. As explained above, the BS and/or the UE may be configured to segment the repetitions 432, 444 into partial, or actual, repetitions (e.g., 431, 433, 443, 445).

In some aspects, the schemes 400 may allow for multi-TB scheduling with repetitions based on existing time-domain configurations and formats. For example, the BS and the UE may transmit and decode repetitions of a plurality of TB's based on a single time-domain configuration associated with the first repetition 412 of the first TB. For example, the time-domain configuration may indicate an entry of a TDRA table, where the entry includes or indicates one mapping type, and one SLIV. In this regard, the schemes 400 allow for simplified time-domain configurations (e.g., TDRA), which may be smaller in size than other time-domain configurations that indicate time-domain parameters for multiple TBs, and/or for multiple repetitions.

FIGS. 5A-5C illustrate multi-TB communication schemes 500a, 500b, 500c, according to some aspects of the present disclosure. In the schemes 500a, 500b, 500c, a BS similar to the BSs 105 may communicate one or more repetitions of a plurality of TBs. The BS and UE may communicate at any suitable frequencies. In some aspects, the BS and the UE may communicate at frequencies of about 3.5 GHz, 6 GHz, 30 GHz or beyond 52.6GHz, etc. In the schemes 500a, 500b, 500c, the BS communicates a plurality of repetitions for a plurality of TBs based on a same number of repetitions, and with the repetitions of different TBs communicated cyclically, such that the repetitions of the different TBs are interlaced with one another. The UE may utilize one or more components of the UE 1000 illustrated in FIG. 10, for example, such as the processor 1002, the memory 1004, the Multi-TB Repetition Module 1008, the transceiver 1010, the modem 1012, and the one or more antennas 1016, to execute the steps of schemes 500a, 500b, and 500c. Further, the BS may utilize one or more of the components of the BS 1100 shown in FIG. 11, such as the processor 1102, the memory 1104, the Multi-TB Repetition Module 1108, the transceiver 1110, the modem 1112, and the one or more antennas 1116, to execute the steps of schemes 500a, 500b, and 500c.

Referring to FIG. 5A, the time mapping of the repetitions 512, 514, 522, 524, 532, 534, 542, 544 may be based on a mapping type and a SLIV associated with a first repetition of each TB. Thus, the repetitions 512, 514 of the first TB may be mapped to the time-domain resources based on the first repetition 512 of the first TB, and the repetitions 522, 524 of the second TB may be mapped to the time-domain resources based on the first repetition 522 of the second TB. The repetitions are mapped and communicated in a cyclical manner, such that one repetition for each TB is transmitted in a cycle, and the cycle is repeated for the number of repetitions. In the illustrated example, the number of repetitions is 2. However, any suitable number of repetitions could be used, including 1, 2, 3, 4, 8, or any other suitable number, both greater or smaller. As in the schemes 300, the repetitions 512, 522, 532, 542, 514, 524, 534, 544 are mapped based on the time-domain resource allocation of the first repetition of each TB. For example, the repetitions may be mapped to the time-domain resource based on a mapping type and SLIV of the first repetition of each TB. In one aspect, the BS or the UE may communicate, map, and/or decode the repetitions based on a SLIV, length, mapping type of the first repetition of each TB. For example, the BS may map the second repetition 514 of the first TB using the same SLIV and mapping type as the first repetition 512.The BS may map the second repetitions 534, 544 of the third TB and fourth TB based on the SLIV of the first repetition 532 of the third TB and the first repetition 542 of the fourth TB. The second repetition 514 of the first TB is mapped on the next slot after the slot for the first repetition of the fourth TB. In some aspects, the BS may transmit, in DCI, an indication of an entry or row of a multi-PXSCH TDRA, which indicates a mapping type and SLIV for each scheduled PXSCH.

Referring to FIG. 5B, the BS may indicate a time-domain indication (e.g., SLIV, mapping type) for each of the repetitions 512, 514, 522, 524, 532, 534, 542, 544 based on a mapping type and a SLIV associated with a first repetition of the first TB and/or repetition type configuration. Thus, the repetitions 522, 532, 542, 514, 524, 534, 544 may be mapped to the time-domain resources based on the time-domain configuration of the first repetition 512 of the first TB. For example, if the time-domain configuration for the first repetition 512 of the first TB indicates a mapping type A for the first repetition 512 or repetition type A is configured, the BS may map the remaining repetitions using the same length as the first repetition 512 in consecutive slots. In some aspects, the BS may transmit, in DCI, an indication of an entry or row of a multi-PXSCH TDRA, which indicates a mapping type and SLIV for each repetition of each TB.

Referring to FIG. 5C, the time mapping of the repetitions 512, 514, 522, 524, 532, 534, 542, 544 may be based on a mapping type and a SLIV associated with a first repetition of the first TB and/or repetition type configuration. Thus, the repetitions 522, 532, 542, 514, 524, 534, 544 may be mapped to the time-domain resources based on the time-domain configuration of the first repetition 512 of the first TB. For example, if the time-domain configuration for the first repetition 512 of the first TB indicates a mapping type B for the first repetition 512 or repetition type B is configured, the BS may map the remaining repetitions using the same length as the first repetition 512, with the remaining repetitions mapped back-to-back. In some aspects, the BS may transmit, in DCI, an indication of an entry or row of a multi-PXSCH TDRA, which indicates a mapping type and SLIV for each scheduled PXSCH. Further, as explained above, if one or more repetitions (e.g., 514, 544) are mapped such that they overlap with a slot boundary (e.g., 505, 507), the BS and/or the UE may segment the overlapping repetitions into partial, or actual, repetitions 513, 515, 543, 545.

FIGS. 6A-6D illustrate multi-TB communication schemes 600a, 600b, 600c, 600d, according to some aspects of the present disclosure. In the schemes 600a, 600b, 600c, 600d, a BS similar to the BSs 105 may communicate one or more repetitions of a plurality of TBs. The BS and UE may communicate at any suitable frequencies. In some aspects, the BS and the UE may communicate at frequencies of about 3.5 GHz, 6 GHz, 30 GHz or beyond 52.6GHz, etc. In the schemes 600a, 600b, 600c, 600d, the BS communicates a plurality of repetitions for a plurality of TBs based on different numbers of repetitions, and with the repetitions of different TBs communicated sequentially, such that the repetitions of a second TB are communicated after all the repetitions of the first TB are communicated. The UE may utilize one or more components of the UE 1000 illustrated in FIG. 10, for example, such as the processor 1002, the memory 1004, the Multi-TB Repetition Module 1008, the transceiver 1010, the modem 1012, and the one or more antennas 1016, to execute the steps of schemes 600a, 600b, 600c and 600d. Further, the BS may utilize one or more of the components of the BS 1100 shown in FIG. 11, such as the processor 1102, the memory 1104, the Multi-TB Repetition Module 1108, the transceiver 1110, the modem 1112, and the one or more antennas 1116, to execute the steps of schemes 600a, 600b, 600c and 600d.

Referring to FIG. 6A, the time mapping of the repetitions 612, 614, 622, 624, 632, 642 may be based on a mapping type associated with a first repetition of each TB or based on a repetition type configuration. Thus, the repetitions 612, 614 of the first TB may be mapped to the time-domain resources based on the first repetition 612 of the first TB, and the repetitions 622, 624 of the second TB may be mapped to the time-domain resources based on the first repetition 622 of the second TB. The repetitions are mapped and communicated in a sequential manner, such that the repetitions 622, 624 of the second TB are communicated after the repetitions 612, 614 of the first TB are communicated, and the repetition 632 of the third TB is communicated after the repetitions 622, 624 of the second TB are communicated, and so on. In the scheme 600a, the BS or the UE maps the repetitions of each TB based on different numbers of repetitions indicated for each TB. For example, the BS may indicate, in DCI, an entry of a multi-TB, multi-repetition TDRA table. The entry may indicate a SLIV, mapping type, and number of repetitions for each TB. In the illustrated example, the number of repetitions for the first TB and second TB is 2, and the number of repetitions for the third TB and the fourth TB is 1. However, any suitable number of repetitions could be used, including 1, 2, 3, 4, 8, or any other suitable number, both greater or smaller. The repetitions 612, 614, 622, 624, 632, 642 are mapped based on the time-domain resource allocation of the first repetition of each TB. For example, the repetitions may be mapped to the time-domain resource based on a mapping type or repetition type of the first repetition of each TB. In one aspect, the BS or the UE may communicate, map, and/or decode the repetitions based on a SLIV, length, mapping type, and/or repetition type of the first repetition of each TB. For example, if the time-domain configuration indicates a mapping type A for the first repetition 612 or repetition type A is configured, the BS may map the second repetition 614 of the first TB using the same SLIV and mapping type as the first repetition 612.If the time-domain configuration indicates a mapping type A for the first repetitions 622of the second TB, the BS may map the second repetition 624 of the second TB using the same SLIV and mapping type as the first repetition 622.. Because the number of repetitions for the third TB and the fourth TB is one, the repetitions 632, 642 are transmitted in different slots, and based on the SLIV and mapping type indicated for each of the third TB and the fourth TB and/or a repetition type configuration.

Referring to FIG. 6B, the repetitions 612, 614, 622, 624, 632, 642 are communicated based on the same number of repetitions of the scheme 600a shown in FIG. 6A. However, in the scheme 600b of FIG. 6B, the repetitions of each TB are mapped to the time-domain based on a mapping type B or repetition type B. Accordingly, the second repetitions 614, 624 of the first TB and the second TB are transmitted back-to-back with the first repetitions 612, 622. Because the number of repetitions for the third TB and the fourth TB is one, the repetitions 632, 642 are transmitted in different slots, and based on the SLIV and mapping type indicated for each of the third TB and the fourth TB and/or a repetition type configuration. As shown in scheme 600c of FIG.6C, the mapping of the second repetition 624 of the second TB causes the second repetition 624 to overlap a slot boundary 605. As explained above, the BS and/or the UE may be configured to segment the second repetition 624 into a first actual repetition 623 on a first side of the slot boundary 605, and a second actual repetition 625 on a second side of the slot boundary 605. In another aspect, the BS and/or the UE may be configured to segment a repetition if the repetition is in conflict with an invalid symbol, for example.

Referring to FIG. 6D, in the scheme 600d, the repetitions 612, 614, 622, 624, 632, 642 are mapped to the time-domain based on different mapping types or repetition types, which are indicated for their respective TBs. In this regard, the repetitions 612, 614 of the first TB, and the repetitions 632, 642 of the third TB and the fourth TB are mapped based on a mapping type A, or a repetition type A. The repetitions 622, 624 are mapped to the time-domain based on a mapping type B or a repetition type B. Accordingly, the repetition 624 is mapped to the time-domain back-to-back with the first repetition 622 of the second TB, and based on a same length indicated for the first repetition 622. As shown, the mapping of the second repetition 624 of the second TB causes the second repetition 624 to overlap a slot boundary 605. As explained above, the BS and/or the UE may be configured to segment the second repetition 624 into a first actual repetition 623 on a first side of the slot boundary 605, and a second actual repetition 625 on a second side of the slot boundary 605. In another aspect, the BS and/or the UE may be configured to segment a repetition if the repetition is in conflict with an invalid symbol, for example.

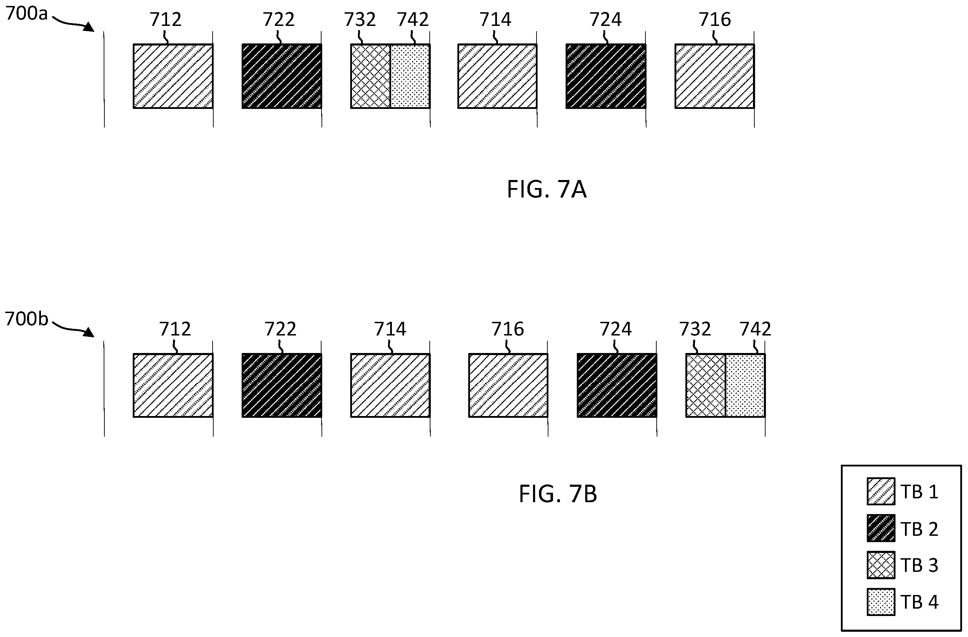

FIGS. 7A and 7B illustrate multi-TB communication schemes 700a, 700b, according to some aspects of the present disclosure. In the schemes 700a, 700b, a BS similar to the BSs 105 may communicate one or more repetitions of a plurality of TBs. The BS and UE may communicate at any suitable frequencies. In some aspects, the BS and the UE may communicate at frequencies of about 3.5 GHz, 6 GHz, 30 GHz or beyond 52.6GHz, etc. In the schemes 700a, 700b, the BS communicates a plurality of repetitions for a plurality of TBs based on different numbers of repetitions, and with the repetitions of different TBs communicated cyclically, such that the repetitions of a second TB are communicated interlaced with the repetitions of a first TB. The UE may utilize one or more components of the UE 1000 illustrated in FIG. 10, for example, such as the processor 1002, the memory 1004, the Multi-TB Repetition Module 1008, the transceiver 1010, the modem 1012, and the one or more antennas 1016, to execute the steps of schemes 700a, 700b. Further, the BS may utilize one or more of the components of the BS 1100 shown in FIG. 11, such as the processor 1102, the memory 1104, the Multi-TB Repetition Module 1108, the transceiver 1110, the modem 1112, and the one or more antennas 1116, to execute the steps of schemes 700a, 700b.

Referring to FIG. 7A, the repetitions 712, 722, 732, 742, 714, 724, 716 are transmitted based on different numbers of repetitions for each TB, and in a cyclical or interlaced pattern. In the illustrated aspect, three repetitions 712, 714, 716 of the first TB are communicated, two repetitions 722, 724 of the second TB are communicated, one repetition 732 of the third TB is communicated, and one repetition 742 of the fourth TB is communicated. The repetitions are mapped such that each TB is communicated as early as possible. In other words, the repetitions are mapped such that one repetition of each TB is transmitted in a cyclical fashion, and the pattern repeats until all repetitions of a given TB are transmitted. Accordingly, communication of the third TB and the fourth TB, which each only have one repetition 732, 742, is complete once the repetitions 732, 742 are communicated. Communication of the second TB is complete as soon the second repetition 724 of the second TB is communicated, and the communication of the first TB is complete once the third repetition 716 is communicated.

In the scheme 700b shown in FIG. 7B, the repetitions 712, 722, 714, 716, 724, 732, 742 are communicated based on different numbers of repetitions for each TB and in a cyclical or interlaced pattern, similar to the schemes 700a shown in FIG. 7A. However, in the scheme 700b, the repetitions are mapped to the time-domain such that each TB is transmitted as late as possible. Accordingly, whereas the communication of the third TB and the fourth TB was completed in the third slot in the scheme 700a, the communication of the third TB and the fourth TB isn't complete until the sixth slot in the scheme 700b. The transmission of the first TB is not complete until the fourth slot in the scheme 700b.

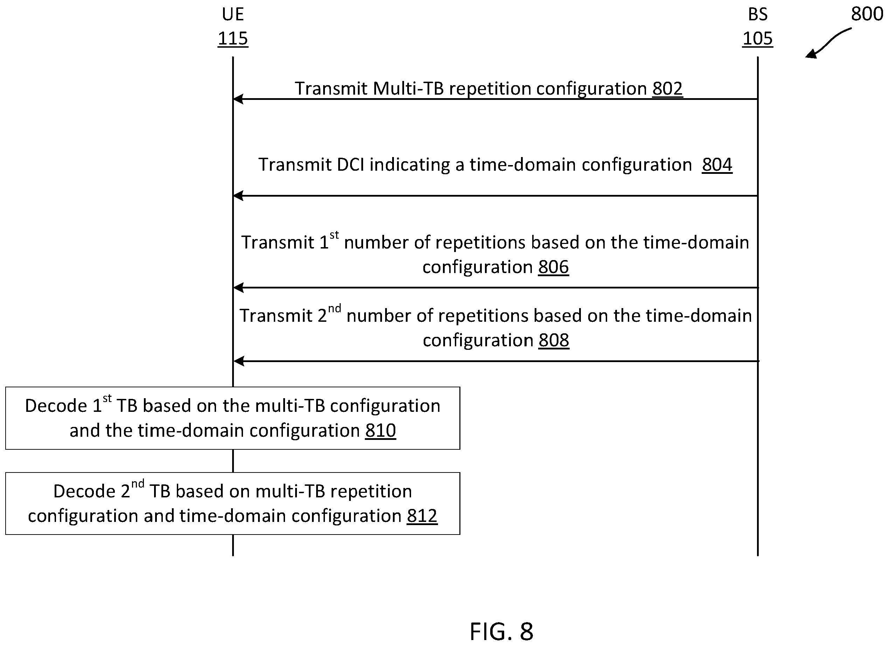

FIG. 8 is a signaling diagram illustrating a method 800 for multi-TB communication with repetitions, according to aspects of the present disclosure. The method 800 is performed by a UE 115, which may be one of the UEs 115 of the network 11, and a BS 105, which may be one of the BSs 105 of the network 100. The UE 115 and/or the BS 105 may be configured to multi-TB repetition communications. The UE 115 may utilize one or more components of the UE 1000 illustrated in FIG. 10, for example, such as the processor 1002, the memory 1004, the Multi-TB Repetition Module 1008, the transceiver 1010, the modem 1012, and the one or more antennas 1016, to execute the steps of the method 800. Further, the BS 105 may utilize one or more of the components of the BS 1100 shown in FIG. 11, such as the processor 1102, the memory 1104, the Multi-TB Repetition Module 1108, the transceiver 1110, the modem 1112, and the one or more antennas 1116, to execute the steps of the method 800.

At action 802, the BS 105 transmits, and the UE 115 receives, a multi-transport block (TB) repetition configuration indicating a first number of repetitions and a second number of repetitions. In some aspects, action 802 may include transmitting a radio resource control (RRC) message including an RRC configuration. For example, the BS 105 may transmit an RRC message indicating a *pdsch-AggregationFactor* or *pusch-AggregationFactor,* or any other suitable parameter, which indicates the first number of repetitions and the second number of repetitions. In another aspect, action 802 may include the BS 105 transmitting a time-domain resource allocation (TDRA) table including a plurality of rows, or entries. In some aspects, one or more rows or entries may include or indicate the first number of repetitions and/or the second number of repetitions. The TDRA entries may also include an index number associated with the entry, and one or more time-domain parameters (e.g., start and length indicator value (SLIV), starting symbol, length, etc.) associated with at least one repetition of the first TB, and at least one repetition of the second TB. In some aspects, a single PXSCH TDRA table may be transmitted at action 802, where the TDRA table indicates only one time-domain configuration (e.g., SLIV, mapping type) in each row or entry of the TDRA table. In another aspect, the TDRA table may be a multi-TB or multi-PXSCH TDRA table that indicates, in each entry, a time-domain configuration for each TB. In another aspect, the TDRA may be a TB repetition TDRA table, where each entry in the TDRA table indicates a mapping type, SLIV or start symbol indicator and length indicator, and a number of repetitions for the scheduled PXSCH. In some aspects, the TDRA table may indicate a same number of repetitions in each TDRA entry. In other aspects, the TDRA table may indicate different numbers of repetitions in different entries. In some aspects, each entry of the TDRA table may indicate multiple numbers of repetitions corresponding to different TBs.

In some aspects, the first number of repetitions may be associated with a first TB and the second number of repetitions may be associated with a second TB. The first TB and the second TB may be associated with a same scheduling grant, in some aspects. In other aspects, the first number of repetitions may be used for each of the first TB and the second TB. In some aspects, the first number of repetitions may be the same as the second number of repetitions. In some aspects, the BS 105 determines the number of TBs by applying a floor operation to a ratio of the first parameter to the second parameter. In some aspects, the BS 105 determines the number of TBs by applying a ceiling operation to a ratio of the first parameter to the second parameter.

At action 804, the BS 105 transmits, and the UE 115 receives, DCI indicating a time-domain configuration for a first TB and a second TB, where the first TB and the second TB are associated with a same scheduling grant. In some aspects, action 804 includes the BS 105 indicating, via the DCI, an entry or row of a TDRA table. The TDRA table may be configured by the BS 105 at action 802, for example. The entry or row of the TDRA table may indicate various time-domain parameters associated with the multi-TB repetition communication. In some aspects, the time-domain indication may also indicate the first number of repetitions for the first TB, and the second number of repetitions for the second TB. In some aspects, the first number of repetitions may be a same value as the second number of repetitions, or a different value as the second number of repetitions. For example, in some aspects, both the first number of repetitions and the second number of repetitions may be 2. In another example, the first number of repetitions may be 3, and the second number of repetitions may be 1. In other aspects, the entry or row of the TDRA table may include or indicate a single time-domain resource allocation which may be used to map and communicate repetitions from each of a plurality of TBs. In other aspects, the entry or row of the TDRA table may include or indicate a time-domain resource allocation for each TB in the multi-TB communication. In still other aspects, the entry or row of the TDRA table may include or indicate a time-domain resource allocation for each repetition of each TB.

At action 806, the BS 105 transmits, and the UE 115 receives, the first number of repetitions of the first TB based on the multi-TB repetition configuration and the time-domain configuration. In some aspects, block action 806 includes the BS 105 transmitting the first number of repetitions of the first TB in one of more scheduled PDSCHs. In another aspect, action 806 may include the UE 115 transmitting the first number of repetitions of the first TB in one or more scheduled PUSCHs. In some aspects, action 806 may include the UE 115 transmitting the first number of repetitions of the first TB in a CG resource, a semi-static resource, or a static resource.

In some aspects, the BS 105 communicates the first number of repetitions based on a mapping type associated with at least one repetition of the first number of repetitions. For example, the BS 105 may communicate a first repetition of the first number of repetitions based on a first time-domain parameter(s) (e.g., SLIV) of the time-domain configuration, and may transmit the other repetition(s) of the first number of repetitions based on the mapping type indicated for the first TB, or of the first repetition of the first TB. In another aspect, the BS 105 communicates the first number of repetitions based on a repetition type associated with at least one repetition of the first number of repetitions of the first TB. For example, the BS 105 may communicate a first repetition of the first number of repetitions based on a first time-domain parameter(s) (e.g., SLIV) of the time-domain configuration, and may transmit the other repetition(s) of the first number of repetitions based on the repetition type indicated for the first TB, or of the first repetition of the first TB. For example, for mapping type A, or repetition type A, the BS 105 may communicate each repetition of the first number of repetitions in a different slot. For mapping type B, or repetition type B, the BS 105 may communicate the remaining repetitions associated with the first TB back-to-back with the first repetition, and with a same length as the first repetition.

At action 808, the BS 105 transmits, and the UE 115 receives, the second number of repetitions of the second TB based on the multi-TB repetition configuration and the time-domain configuration. In some aspects, block action 808 includes the BS 105 transmitting the second number of repetitions of the second TB in one of more scheduled PDSCHs. In another aspect, action 808 may include the UE 115 transmitting the second number of repetitions of the second TB in one or more scheduled PUSCHs. In some aspects, action 808 may include the UE 115 transmitting the second number of repetitions of the second TB in a CG resource, a semi-static resource, or a static resource.

In some aspects, the BS 105 communicates the second number of repetitions based on a mapping type associated with at least one repetition of the second number of repetitions. For example, the BS 105 may communicate a first repetition of the second number of repetitions based on a second time-domain parameter(s) (e.g., SLIV) of the time-domain configuration, and may transmit the other repetition(s) of the second number of repetitions based on the mapping type indicated for the first TB, or of the first repetition of the second TB. In another aspect, the BS 105 communicates the second number of repetitions based on a repetition type associated with at least one repetition of the second number of repetitions. For example, the BS 105 may communicate a first repetition of the second number of repetitions based on a second time-domain parameter(s) (e.g., SLIV) of the time-domain configuration, and may transmit the other repetition(s) of the first number of repetitions based on the repetition type indicated for the second TB, or of the first repetition of the second TB. For example, for mapping type A, or repetition type A, the BS 105 may communicate each repetition of the second number of repetitions in a different slot. For mapping type B, or repetition type B, the BS 105 may communicate the remaining repetitions associated with the second TB back-to-back with the first repetition, and with a same length as the first repetition.

In some aspects, actions 806 and 808 include communicating a same number of repetitions of each of the first TB and the second TB. In other aspects, actions 806 and 808 include communicating different numbers of repetitions of the first TB and the second TB. For example, in some aspects, action 806 may include transmitting one or more indications of a TDRA entry, where each TDRA entry indicates a number of repetitions for each TB. Further, in some aspects, the BS 105 may be configured with TB segmentation. For example, if the time-domain configuration of the first TB or the second TB causes a TB repetition to overlap a slot boundary, the BS 105 may be configured to segment the overlapping TB repetition (which may be referred to as a nominal repetition) into two partial repetitions. The partial repetitions may be referred to as actual repetitions.

At action 810, the UE 115 decodes the first TB based on the indication of the time-domain configuration. For example, the UE 115 may be configured to receive and decode the first TB based on an entry in a TDRA table, where the entry is provided by the BS 105 in the DCI transmitted at action 804. In some aspects, the UE 115 may be configured to decode the first TB based on a single TB TDRA indication, where the indicated entry of the TDRA indicates a time-domain resource allocation (e.g., SLIV, starting symbol, length, mapping type) for the first repetition of the first TB. The UE 115 may decode the first TB based on the assumption that the remaining repetitions of the first TB will be transmitted based on the same mapping type, SLIV, and/or length as the first repetition of the first TB. In another aspect, the entry of the TDRA table may indicate a time-domain resource allocation for each TB, but not for each repetition of each TB. Accordingly, the UE 115 may decode the first TB based on the assumption that the remaining repetitions of the first TB will be based on the mapping type, length, and/or SLIV of the first repetition of the first TB. In another aspect, the entry of the TDRA table may indicate a time-domain resource allocation for a plurality of repetitions, but for a single TB. Accordingly, the UE 115 may be configured to decode the first TB based on the number of repetitions indicated in the TDRA entry, and further based on the mapping type, SLIV, and/or length of the first repetition of the first TB.

Further, the UE 115 decodes the first TB based on the multi-TB configuration. In some aspects, the number of repetitions for one or more of the TBs may be statically or semi-statically configured. For example, in some aspects, a single number of repetitions may be configured by RRC signaling and used by the BS 105 and the UE 115 to communicate all TBs in the multi-TB communication. Accordingly, the UE 115 may decode the first TB based on the number of repetitions configured by RRC. In another aspect, the number of repetitions may be configured in the TDRA table, where each entry indicates a single number of repetitions for all TBs. In other aspects, the number of repetitions may be separate for each TB. For example, each entry of the TDRA table may indicate a separate number of repetitions for each TB.

At action 812, the UE 115 decodes the second TB based on the multi-TB configuration and the indication of the time-domain configuration. For example, the UE 115 may be configured to receive and decode the second TB based on an entry in a TDRA table, where the entry is provided by the BS 105 in the DCI transmitted at action 804. In some aspects, the UE 115 may be configured to decode the second TB based on a single TB TDRA indication, where the indicated entry of the TDRA indicates a time-domain resource allocation (e.g., SLIV, starting symbol, length, mapping type) for the first repetition of the second TB. The UE 115 may decode the second TB based on the assumption that the remaining repetitions of the second TB will be transmitted based on the same mapping type, SLIV, and/or length as the first repetition of the second TB. In another aspect, the entry of the TDRA table may indicate a time-domain resource allocation for each TB, but not for each repetition of each TB. Accordingly, the UE 115 may decode the second TB based on the assumption that the remaining repetitions of the second TB will be based on the mapping type, length, and/or SLIV of the first repetition of the second TB. In another aspect, the entry of the TDRA table may indicate a time-domain resource allocation for a plurality of repetitions, but for a single TB. Accordingly, the UE 115 may be configured to decode the second TB based on the number of repetitions indicated in the TDRA entry, and further based on the mapping type, SLIV, and/or length of the first repetition of the second TB.

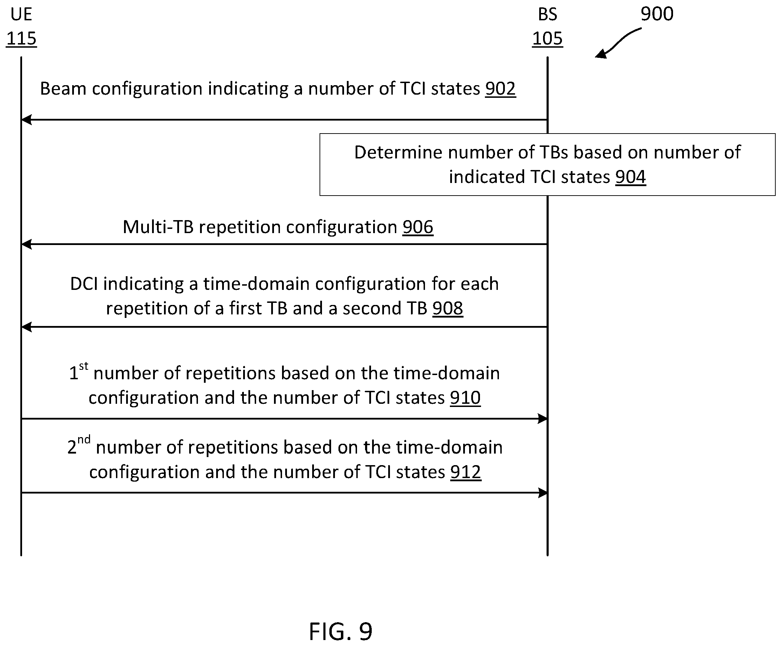

FIG. 9 is a signaling diagram illustrating a method 900 for multi-TB communication with repetitions, according to aspects of the present disclosure. The method 900 is performed by a UE 115, which may be one of the UE 115s 115 of the network 100, and a BS 105, which may be one of the BS 105s 105 of the network 100. The UE 115 and/or the BS 105 may be configured to multi-TB repetition communications. In the method 900, the BS 105 and/or the UE 115 may communicate multiple TBs having one or more repetitions, where the number of TBs is based on a beam configuration for the BS 105-UE communications. For example, the number of TBs may be based on a number of indicated transmission configuration indication (TCI) states. The UE 115 may utilize one or more components of the UE 115 1000 illustrated in FIG. 10, for example, such as the processor 1002, the memory 1004, the Multi-TB Repetition Module 1008, the transceiver 1010, the modem 1012, and the one or more antennas 1016, to execute the steps of the method 900. Further, the BS 105 may utilize one or more of the components of the BS 105 1100 shown in FIG. 11, such as the processor 1102, the memory 1104, the Multi-TB Repetition Module 1108, the transceiver 1110, the modem 1112, and the one or more antennas 1116, to execute the steps of the method 900.

At action 902, the BS 105 transmits, and the UE 115 receives, a beam configuration indicating one or more TCI states. The TCI states may be associated with one or more beam directions. In some aspects, the beam configuration may be associated with a multiple-input-multiple-output (MIMO) communication scheme. In other aspects, the beam configuration may be associated with a multiple transmission and reception point (multi-TRP) communication scheme.

At action 904, the BS 105 determines a number of TBs based on a number of TCI states indicated in the beam configuration. Further, the BS 105 may determine the number of TBs for communication based on a multi-TB repetition configuration that may be used for a multi-TB communication. For example, in some aspects, the BS 105 may determine the number of TBs for transmission based on a ratio of a number of parameters indicated in the time-domain configuration, and the number of indicated TCI states. For example, in one aspect, the number of TBs *N* to communicate is determined based on the relationship *N = floor*(*M*/*Q*)*,* where *M* is the number of SLIVs in an indicated TDRA entry, and *Q* is the number of indicated TCI states. In another example, the number of TBs *N* may be determined based on the relationship *N = ceil(M*/*Q).* In one aspect, the number of repetitions for the first (N-1) TBs is equal to the number of indicated TCI states *Q*, and the number of repetitions for the last TB is equal to *M-*(*N*-1)**Q.* In another aspect, the number of repetitions for the first TB can be determined as *M*-(*N-*1)**Q ,* and the number of repetitions for the remaining (*N-*1) TBs is equal to the number of indicated TCI states *Q*. As explained above, the repetitions of the number of TBs determined based on the indicated TCI states may be mapped to the time resources sequentially or interlaced with each other. The mapping of the repetitions as either sequential or interlaced may be configured by RRC signaling.

At action 906, the BS 105 transmits, and the UE 115 receives, a multi-transport block (TB) repetition configuration indicating a first number of repetitions and a second number of repetitions. In some aspects, action 906 may include transmitting a radio resource control (RRC) message including an RRC configuration. For example, the BS 105 may transmit an RRC message indicating a *pdsch-AggregationFactor* or *pusch-AggregationFactor,* or any other suitable parameter, which indicates the first number of repetitions and the second number of repetitions. In another aspect, action 906 may include the BS 105 transmitting a time-domain resource allocation (TDRA) table including a plurality of rows, or entries. In some aspects, one or more rows or entries may include or indicate the first number of repetitions and/or the second number of repetitions. The TDRA entries may also include an index number associated with the entry, and one or more time-domain parameters (e.g., start and length indicator value (SLIV), starting symbol, length, etc.) associated with at least one repetition of the first TB, and at least one repetition of the second TB. In some aspects, a single PXSCH TDRA table may be transmitted at action 906, where the TDRA table indicates only one time-domain resource allocation (e.g., SLIV, mapping type) in each row or entry of the TDRA table. In another aspect, the TDRA table may be a multi-TB or multi-PXSCH TDRA table that indicates, in each entry, a time-domain resource allocation for each TB. In another aspect, the TDRA may be a TB repetition TDRA table, where each entry in the TDRA table indicates a mapping type, SLIV or start symbol indicator and length indicator, and a number of repetitions for the scheduled PXSCH.

In some aspects, the first number of repetitions may be associated with a first TB and the second number of repetitions may be associated with a second TB. The first TB and the second TB may be associated with a same scheduling grant, in some aspects. In other aspects, the first number of repetitions may be used for each of the first TB and the second TB. In some aspects, the BS 105 determines the number of TBs by applying a floor operation to a ratio of the first parameter to the second parameter. In some aspects, the BS 105 determines the number of TBs by applying a ceiling operation to a ratio of the first parameter to the second parameter.

At action 908, the BS 105 transmits, and the UE 115 receives, DCI indicating a time-domain configuration for a first TB and a second TB, where the first TB and the second TB are associated with a same scheduling grant. In some aspects, action 908 includes the BS 105 indicating, via the DCI, an entry or row of a TDRA table. The TDRA table may be configured by the BS 105 at action 906, for example. The entry or row of the TDRA table may indicate various time-domain parameters associated with the multi-TB repetition communication. In some aspects, the time-domain indication may also indicate the first number of repetitions for the first TB, and the second number of repetitions for the second TB. In some aspects, the first number of repetitions may be a same value as the second number of repetitions, or a different value as the second number of repetitions. For example, in some aspects, both the first number of repetitions and the second number of repetitions may be 2. In another example, the first number of repetitions may be 3, and the second number of repetitions may be 1. In other aspects, the entry or row of the TDRA table may include or indicate a single time-domain resource allocation which may be used to map and communicate repetitions from each of a plurality of TBs. In other aspects, the entry or row of the TDRA table may include or indicate a time-domain resource allocation for each TB in the multi-TB communication. In still other aspects, the entry or row of the TDRA table may include or indicate a time-domain resource allocation for each repetition of each TB.

At action 910, the UE 115 transmits, and the BS 105 receives, the first number of repetitions of the first TB based on the multi-TB repetition configuration and the time-domain configuration. In some aspects, block action 910 includes the UE 115 transmitting the first number of repetitions of the first TB in one of more scheduled PUSCHs. In another aspect, action 910 may include the BS 105 transmitting the first number of repetitions of the first TB in one or more scheduled PDSCHs. In some aspects, action 910 may include the UE 115 transmitting the first number of repetitions of the first TB in a CG resource, a semi-static resource, or a static resource.

In some aspects, the UE 115 communicates the first number of repetitions based on a mapping type associated with at least one repetition of the first number of repetitions. For example, the UE 115 may communicate a first repetition of the first number of repetitions based on a first time-domain parameter(s) (e.g., SLIV) of the time-domain configuration, and may transmit the other repetition(s) of the first number of repetitions based on the mapping type indicated for the first TB, or of the first repetition of the first TB. In another aspect, the BS 105 communicates the first number of repetitions based on a repetition type associated with at least one repetition of the first number of repetitions of the first TB. For example, the UE 115 may communicate a first repetition of the first number of repetitions based on a first time-domain parameter(s) (e.g., SLIV) of the time-domain configuration, and may transmit the other repetition(s) of the first number of repetitions based on the repetition type indicated for the first TB, or of the first repetition of the first TB. For example, for mapping type A, or repetition type A, the UE 115 may communicate each repetition of the first number of repetitions in a different slot. For mapping type B, or repetition type B, the UE 115 may communicate the remaining repetitions associated with the first TB back-to-back with the first repetition, and with a same length as the first repetition.

At action 912, the UE 115 transmits, and the BS 105 receives, the second number of repetitions of the second TB based on the multi-TB repetition configuration and the time-domain configuration. In some aspects, block action 912 includes the UE 115 transmitting the second number of repetitions of the second TB in one of more scheduled PUSCHs. In another aspect, action 912 may include the BS 105 transmitting the second number of repetitions of the second TB in one or more scheduled PDSCHs. In some aspects, action 912 may include the UE 115 transmitting the second number of repetitions of the second TB in a CG resource, a semi-static resource, or a static resource.

In some aspects, the UE 115 communicates the second number of repetitions based on a mapping type associated with at least one repetition of the second number of repetitions. For example, the UE 115 may communicate a first repetition of the second number of repetitions based on a second time-domain parameter(s) (e.g., SLIV) of the time-domain configuration, and may transmit the other repetition(s) of the second number of repetitions based on the mapping type indicated for the first TB, or of the first repetition of the second TB. In another aspect, the UE 115 communicates the second number of repetitions based on a repetition type associated with at least one repetition of the first number of repetitions. For example, the UE 115 may communicate a first repetition of the second number of repetitions based on a second time-domain parameter(s) (e.g., SLIV) of the time-domain configuration, and may transmit the other repetition(s) of the first number of repetitions based on the repetition type indicated for the second TB, or of the first repetition of the second TB. For example, for mapping type A, or repetition type A, the UE 115 may communicate each repetition of the second number of repetitions in a different slot. For mapping type B, or repetition type B, the UE 115 may communicate the remaining repetitions associated with the second TB back-to-back with the first repetition, and with a same length as the first repetition.

In some aspects, actions 910 and 912 include communicating a same number of repetitions of each of the first TB and the second TB. In other aspects, actions 910 and 912 include communicating different numbers of repetitions of the first TB and the second TB. For example, in some aspects, action 910 may include transmitting one or more indications of a TDRA entry, where each TDRA entry indicates a number of repetitions for each TB. Further, in some aspects, the UE 115 may be configured with TB segmentation. For example, if the time-domain configuration of the first TB or the second TB causes a TB repetition to overlap a slot boundary, the UE 115 may be configured to segment the overlapping TB repetition (which may be referred to as a nominal repetition) into two partial repetitions. The partial repetitions may be referred to as actual repetitions.

FIG. 10 is a block diagram of an exemplary UE 1000 according to some aspects of the present disclosure. The UE 1000 may be a UE 115 discussed above in FIG. 1. As shown, the UE 1000 may include a processor 1002, a memory 1004, a Multi-TB Repetition Module 1008, a transceiver 1010 including a modem subsystem 1012 and a radio frequency (RF) unit 1014, and one or more antennas 1016. These elements may be in direct or indirect communication with each other, for example via one or more buses.

The processor 1002 may include a central processing unit (CPU), a digital signal processor (DSP), an application specific integrated circuit (ASIC), a controller, a field programmable gate array (FPGA) device, another hardware device, a firmware device, or any combination thereof configured to perform the operations described herein. The processor 1002 may also be implemented as a combination of computing devices, *e.g.,* a combination of a DSP and a microprocessor, a plurality of microprocessors, one or more microprocessors in conjunction with a DSP core, or any other such configuration.

The memory 1004 may include a cache memory (*e.g.,* a cache memory of the processor 1002), random access memory (RAM), magnetoresistive RAM (MRAM), read-only memory (ROM), programmable read-only memory (PROM), erasable programmable read only memory (EPROM), electrically erasable programmable read only memory (EEPROM), flash memory, solid state memory device, hard disk drives, other forms of volatile and non-volatile memory, or a combination of different types of memory. In an aspect, the memory 1004 includes a non-transitory computer-readable medium. The memory 1004 may store, or have recorded thereon, instructions 1006. The instructions 1006 may include instructions that, when executed by the processor 1002, cause the processor 1002 to perform the operations described herein with reference to the UEs 115 in connection with aspects of the present disclosure, for example, aspects of FIGS. 1-7B. Instructions 1006 may also be referred to as program code. The program code may be for causing a wireless communication device to perform these operations, for example by causing one or more processors (such as processor 1002) to control or command the wireless communication device to do so. The terms "instructions" and "code" should be interpreted broadly to include any type of computer-readable statement(s). For example, the terms "instructions" and "code" may refer to one or more programs, routines, sub-routines, functions, procedures, *etc.* "Instructions" and "code" may include a single computer-readable statement or many computer-readable statements.

The Multi-TB Repetition Module 1008 may be implemented via hardware, software, or combinations thereof. For example, Multi-TB Repetition Module 1008 may be implemented as a processor, circuit, and/or instructions 1006 stored in the memory 1004 and executed by the processor 1002. In some examples, the Multi-TB Repetition Module 1008 can be integrated within the modem subsystem 1012. For example, the Multi-TB Repetition Module 1008 can be implemented by a combination of software components (*e.g.,* executed by a DSP or a general processor) and hardware components (*e.g.,* logic gates and circuitry) within the modem subsystem 1012. In some examples, a UE may include one or more Multi-TB Repetition Module 1008.

The Multi-TB Repetition Module 1008 may be implemented via hardware, software, or combinations thereof. For example, the Multi-TB Repetition Module 1008 may be implemented as a processor, circuit, and/or instructions 1006 stored in the memory 1004 and executed by the processor 1002. In some examples, the Multi-TB Repetition Module 1008 can be integrated within the modem subsystem 1012. For example, the Multi-TB Repetition Module 1008 can be implemented by a combination of software components (*e.g.*, executed by a DSP or a general processor) and hardware components (*e.g.*, logic gates and circuitry) within the modem subsystem 1012. In some examples, a UE may include one or more Multi-TB Repetition Module 1008.

The Multi-TB Repetition Module 1008 may be used for various aspects of the present disclosure, for example, aspects of FIGS. 1-7B. In some aspects, the Multi-TB Repetition Module 1008 is configured to receive, from a BS, a multi-transport block (TB) repetition configuration indicating a first number of repetitions and a second number of repetitions. In some aspects, the Multi-TB Repetition Module 1008 is configured to receive a radio resource control (RRC) message including an RRC configuration. For example, the Multi-TB Repetition Module 1008 may transmit an RRC message indicating a *pdsch-AggregationFactor* or *pusch-AggregationFactor,* or any other suitable parameter, which indicates the first number of repetitions and the second number of repetitions. In another aspect, the Multi-TB Repetition Module 1008 is configured to receive a time-domain resource allocation (TDRA) table including a plurality of rows, or entries. In some aspects, one or more rows or entries may include or indicate the first number of repetitions and/or the second number of repetitions. The TDRA entries may also include an index number associated with the entry, and one or more time-domain parameters (e.g., start and length indicator value (SLIV), starting symbol, length, etc.) associated with at least one repetition of the first TB, and at least one repetition of the second TB. In some aspects, the first number of repetitions may be associated with a first TB and the second number of repetitions may be associated with a second TB. The first TB and the second TB may be associated with a same scheduling grant, in some aspects. In other aspects, the first number of repetitions may be used for each of the first TB and the second TB. In some aspects, the Multi-TB Repetition Module 1008 is configured to determine the number of TBs by applying a floor operation to a ratio of the first parameter to the second parameter. In some aspects, the Multi-TB Repetition Module 1008 is configured to determine the number of TBs by applying a ceiling operation to a ratio of the first parameter to the second parameter.

In one example, the Multi-TB Repetition Module 1008 is configured to receive, from the BS, DCI indicating a time-domain configuration for a first TB and a second TB, where the first TB and the second TB are associated with a same scheduling grant. In some aspects, the Multi-TB Repetition Module 1008 is configured to indicate, via the DCI, an entry or row of a TDRA table. The TDRA table may be configured by the Multi-TB Repetition Module, for example. The entry or row of the TDRA table may indicate various time-domain parameters associated with the multi-TB repetition communication. In some aspects, the time-domain indication may also indicate the first number of repetitions for the first TB, and the second number of repetitions for the second TB. In some aspects, the first number of repetitions may be a same value as the second number of repetitions, or a different value as the second number of repetitions. For example, in some aspects, both the first number of repetitions and the second number of repetitions may be 2. In another example, the first number of repetitions may be 3, and the second number of repetitions may be 1.

In another aspect, the Multi-TB Repetition Module 1008 is configured to communicate, with the BS based on the multi-TB repetition configuration and the time-domain configuration, the first number of repetitions of the first TB. In some aspects, the Multi-TB Repetition Module 1008 is configured to receive the first number of repetitions of the first TB in one of more scheduled PDSCHs. In other aspects the Multi-TB Repetition Module 1008 is configured to receive the first number of repetitions of the first TB in one or more scheduled PUSCHs. In some aspects, the Multi-TB Repetition Module 1008 is configured to receive the first number of repetitions of the first TB in a CG resource, a semi-static resource, or a static resource.

In some aspects, the Multi-TB Repetition Module 1008 is configured to communicate the first number of repetitions based on a mapping type associated with at least one repetition of the first number of repetitions. For example, the Multi-TB Repetition Module 1008 is configured to communicate a first repetition of the first number of repetitions based on a first time-domain parameter(s) (e.g., SLIV) of the time-domain configuration, and may communicate the other repetition(s) of the first number of repetitions based on the mapping type indicated for the first TB, or of the first repetition of the first TB. In another aspect, the Multi-TB Repetition Module 1008 is configured to communicate the first number of repetitions based on a repetition type associated with at least one repetition of the first number of repetitions. For example, the Multi-TB Repetition Module 1008 may be configured to communicate a first repetition of the first number of repetitions based on a first time-domain parameter(s) (e.g., SLIV) of the time-domain configuration, and may communicate the other repetition(s) of the first number of repetitions based on the repetition type indicated for the first TB, or of the first repetition of the first TB. For example, for mapping type A, or repetition type A, the Multi-TB Repetition Module 1008 may be configured to communicate each repetition of the first number of repetitions in a different slot. For mapping type B, or repetition type B, the Multi-TB Repetition Module 1008 may be configured to communicate the remaining repetitions associated with the first TB back-to-back with the first repetition, and with a same length as the first repetition.

In another aspect, the Multi-TB Repetition Module 1008 is configured to communicate, with the BS based on the multi-TB repetition configuration and the time-domain configuration, the second number of repetitions of the second TB. In some aspects, the Multi-TB Repetition Module 1008 is configured to receive the second number of repetitions of the second TB in one of more scheduled PDSCHs. In other aspects, the Multi-TB Repetition Module 1008 is configured to receive the second number of repetitions of the second TB in one or more scheduled PUSCHs. In some aspects, the Multi-TB Repetition Module 1008 is configured to communicate the second number of repetitions of the second TB in a CG resource, a semi-static resource, or a static resource. In some aspects, the Multi-TB Repetition Module 1008 is configured to communicate the second number of repetitions of the second TB sequentially with the first number of repetitions of the first TB. That is, in some aspects, the Multi-TB Repetition Module 1008 is configured to communicate the first number of repetitions of the first TB, and communicate the second number of repetitions of the second TB after communicating the first number of repetitions of the first TB. In other aspects, the Multi-TB Repetition Module 1008 is configured to communicate the second number of repetitions interlaced with the first number of repetitions.

In some aspects, the Multi-TB Repetition Module 1008 is configured to communicate the second number of repetitions based on a mapping type associated with at least one repetition of the second number of repetitions. For example, the Multi-TB Repetition Module 1008 may be configured to communicate a first repetition of the second number of repetitions based on a second time-domain parameter(s) (e.g., SLIV) of the time-domain configuration, and may communicate the other repetition(s) of the second number of repetitions based on the mapping type indicated for the first TB, or of the first repetition of the second TB. In another aspect, the Multi-TB Repetition Module 1008 is configured to communicate the second number of repetitions based on a repetition type associated with at least one repetition of the first number of repetitions. For example, the Multi-TB Repetition Module 1008 may be configured to communicate a first repetition of the second number of repetitions based on a second time-domain parameter(s) (e.g., SLIV) of the time-domain configuration, and may communicate the other repetition(s) of the first number of repetitions based on the repetition type indicated for the second TB, or of the first repetition of the second TB. For example, for mapping type A, or repetition type A, the Multi-TB Repetition Module 1008 may communicate each repetition of the second number of repetitions in a different slot. For mapping type B, or repetition type B, the Multi-TB Repetition Module 1008 may communicate the remaining repetitions associated with the second TB back-to-back with the first repetition, and with a same length as the first repetition.

As explained above, in some aspects, the Multi-TB Repetition Module 1008 may be configured to communicate a same number of repetitions of each of the first TB and the second TB. In other aspects, the Multi-TB Repetition Module 1008 may be configured to communicate different numbers of repetitions of the first TB and the second TB. For example, in some aspects, the Multi-TB Repetition Module 1008 may be configured to receive one or more indications of a TDRA entry, where each TDRA entry indicates a number of repetitions for each TB. Further, in some aspects, the Multi-TB Repetition Module 1008 may be configured with TB segmentation. For example, if the time-domain configuration of the first TB or the second TB causes a TB repetition to overlap a slot boundary, the Multi-TB Repetition Module 1008 may be configured to segment the overlapping TB repetition (which may be referred to as a nominal repetition) into two partial repetitions. The partial repetitions may be referred to as actual repetitions.

In another aspect, the Multi-TB Repetition Module 1008 may communicate a plurality of repetitions of the first TB and the second TB based on a time-domain configuration of the first TB. For example, the Multi-TB Repetition Module 1008 may communicate one or more repetitions of the first TB and one or more repetitions of the second TB based on a time-domain configuration of a first repetition of the first number of repetitions of the first TB. For example, the Multi-TB Repetition Module 1008 may communicate the repetitions other than the first repetition of the first TB based on a repetition type or mapping type indicated for the first TB, or for the first repetition of the first TB. In another aspect, the time-domain configuration may indicate one or more time parameters (e.g., SLIV, mapping type, repetition type) for each repetition of each TB.

In another aspect, the Multi-TB Repetition Module 1008 may be configured to communicate a number of TBs based on a number of indicated transmission configuration indication (TCI) states. For example, in some aspects, the Multi-TB Repetition Module 1008 may determine the number of TBs for transmission based on a ratio of a number of parameters indicated in the time-domain configuration, and the number of indicated TCI states. For example, in one aspect, the number of *T*Bs *N* to communicate is determined based on the relationship *N = floor*(*M*/*Q*)*,* where *M* is the number of SLIVs in an indicated TDRA entry, and *Q* is the number of indicated TCI states. In another example, the number of TBs *N* may be determined based on the relationship *N = ceil(M*/*Q).* In one aspect, the number of repetitions for the first (N-1) TBs is equal to the number of indicated TCI states *Q*, and the number of repetitions for the last TB is equal to *M-*(*N-*1)**Q.* In another aspect, the number of repetitions for the first TB can be determined as *M-*(*N-*1)**Q ,* and the number of repetitions for the remaining (*N-*1) TBs is equal to the number of indicated TCI states *Q*. As explained above, the repetitions of the number of TBs determined based on the indicated TCI states may be mapped to the time resources sequentially or interlaced with each other. The mapping of the repetitions as either sequential or interlaced may be configured by RRC signaling.

As shown, the transceiver 1010 may include the modem subsystem 1012 and the RF unit 1014. The transceiver 1010 can be configured to communicate bi-directionally with other devices, such as the BSs 105. The modem subsystem 1012 may be configured to modulate and/or encode the data from the memory 1004 according to a modulation and coding scheme (MCS), *e.g.,* a low-density parity check (LDPC) coding scheme, a turbo coding scheme, a convolutional coding scheme, a digital beamforming scheme, *etc.* The RF unit 1014 may be configured to process (*e.g.,* perform analog to digital conversion or digital to analog conversion, *etc.*) modulated/encoded data (*e.g.,* configured grant UL transmissions, PUSCH) from the modem subsystem 1012 (on outbound transmissions) or of transmissions originating from another source such as a UE 115 or a BS 105. The RF unit 1014 may be further configured to perform analog beamforming in conjunction with the digital beamforming. Although shown as integrated together in transceiver 1010, the modem subsystem 1012 and the RF unit 1014 may be separate devices that are coupled together at the UE 115 to enable the UE 115 to communicate with other devices.

The RF unit 1014 may provide the modulated and/or processed data, *e.g.* data packets (or, more generally, data messages that may contain one or more data packets and other information), to the antennas 1016 for transmission to one or more other devices. The antennas 1016 may further receive data messages transmitted from other devices. The antennas 1016 may provide the received data messages for processing and/or demodulation at the transceiver 1010. The transceiver 1010 may provide the demodulated and decoded data (*e.g.,* configured grant information, parameters, bitmaps, other system and channel parameters, HARQ-ACK messages) to the Multi-TB Repetition Module 1008 for processing. The antennas 1016 may include multiple antennas of similar or different designs in order to sustain multiple transmission links. The RF unit 1014 may configure the antennas 1016. In an example, the transceiver 1010 is configured to receive, from a base station (BS), information or parameters regarding a configured grant resource, and communicate, with the BS, PUSCHs and HARQ-ACKs associated with HARQ processes and HARQ process IDs, for example, by coordinating with the Multi-TB Repetition Module 1008.

In an aspect, the UE 1000 can include multiple transceivers 1010 implementing different RATs (*e.g.,* NR and LTE). In an aspect, the UE 1000 can include a single transceiver 1010 implementing multiple RATs (*e.g.,* NR and LTE). In an aspect, the transceiver 1010 can include various components, where different combinations of components can implement different RATs.

FIG. 11 is a block diagram of an exemplary BS 1100 according to some aspects of the present disclosure. The BS 1100 may be a BS 105 in the network 100 as discussed above in FIG. 1. A shown, the BS 1100 may include a processor 1102, a memory 1104, Multi-TB Repetition Module 1108, a transceiver 1110 including a modem subsystem 1112 and a RF unit 1114, and one or more antennas 1116. These elements may be in direct or indirect communication with each other, for example via one or more buses.

The processor 1102 may have various features as a specific-type processor. For example, these may include a CPU, a DSP, an ASIC, a controller, a FPGA device, another hardware device, a firmware device, or any combination thereof configured to perform the operations described herein. The processor 1102 may also be implemented as a combination of computing devices, *e.g.,* a combination of a DSP and a microprocessor, a plurality of microprocessors, one or more microprocessors in conjunction with a DSP core, or any other such configuration.

The memory 1104 may include a cache memory (*e.g.*, a cache memory of the processor 1102), RAM, MRAM, ROM, PROM, EPROM, EEPROM, flash memory, a solid state memory device, one or more hard disk drives, memristor-based arrays, other forms of volatile and non-volatile memory, or a combination of different types of memory. In some aspects, the memory 1104 may include a non-transitory computer-readable medium. The memory 1104 may store instructions 1106. The instructions 1106 may include instructions that, when executed by the processor 1102, cause the processor 1102 to perform operations described herein, for example, aspects of FIGS. 2-7B. Instructions 1106 may also be referred to as code, which may be interpreted broadly to include any type of computer-readable statement(s).

The Multi-TB Repetition Module 1108 may be implemented via hardware, software, or combinations thereof. For example, the Multi-TB Repetition Module 1108 may be implemented as a processor, circuit, and/or instructions 1106 stored in the memory 1104 and executed by the processor 1102. In some examples, the Multi-TB Repetition Module 1108 can be integrated within the modem subsystem 1112. For example, the Multi-TB Repetition Module 1108 can be implemented by a combination of software components (*e.g*., executed by a DSP or a general processor) and hardware components (*e.g.,* logic gates and circuitry) within the modem subsystem 1112. In some examples, a UE may include one or more Multi-TB Repetition Module 1108.

The Multi-TB Repetition Module 1108 may be used for various aspects of the present disclosure, for example, aspects of FIGS. 1-7B. In some aspects, the Multi-TB Repetition Module 1108 is configured to transmit, to a UE, a multi-transport block (TB) repetition configuration indicating a first number of repetitions and a second number of repetitions. In some aspects, the Multi-TB Repetition Module 1108 is configured to transmit a radio resource control (RRC) message including an RRC configuration. For example, the Multi-TB Repetition Module 1108 may transmit an RRC message indicating a *pdsch-AggregationFactor* or *pusch-AggregationFactor,* or any other suitable parameter, which indicates the first number of repetitions and the second number of repetitions. In another aspect, the Multi-TB Repetition Module 1108 is configured to transmit a time-domain resource allocation (TDRA) table including a plurality of rows, or entries. In some aspects, one or more rows or entries may include or indicate the first number of repetitions and/or the second number of repetitions. The TDRA entries may also include an index number associated with the entry, and one or more time-domain parameters (e.g., start and length indicator value (SLIV), starting symbol, length, etc.) associated with at least one repetition of the first TB, and at least one repetition of the second TB. In some aspects, the first number of repetitions may be associated with a first TB and the second number of repetitions may be associated with a second TB. The first TB and the second TB may be associated with a same scheduling grant, in some aspects. In other aspects, the first number of repetitions may be used for each of the first TB and the second TB. In some aspects, the Multi-TB Repetition Module 1108 is configured to determine the number of TBs by applying a floor operation to a ratio of the first parameter to the second parameter. In some aspects, the Multi-TB Repetition Module 1108 is configured to determine the number of TBs by applying a ceiling operation to a ratio of the first parameter to the second parameter.

In one example, the Multi-TB Repetition Module 1108 is configured to transmit, to the UE, DCI indicating a time-domain configuration for a first TB and a second TB, where the first TB and the second TB are associated with a same scheduling grant. In some aspects, the Multi-TB Repetition Module 1108 is configured to indicate, via the DCI, an entry or row of a TDRA table. The TDRA table may be configured by the Multi-TB Repetition Module, for example. The entry or row of the TDRA table may indicate various time-domain parameters associated with the multi-TB repetition communication. In some aspects, the time-domain indication may also indicate the first number of repetitions for the first TB, and the second number of repetitions for the second TB. In some aspects, the first number of repetitions may be a same value as the second number of repetitions, or a different value as the second number of repetitions. For example, in some aspects, both the first number of repetitions and the second number of repetitions may be 2. In another example, the first number of repetitions may be 3, and the second number of repetitions may be 1.

In another aspect, the Multi-TB Repetition Module 1108 is configured to communicate, with the UE based on the multi-TB repetition configuration and the time-domain configuration, the first number of repetitions of the first TB. In some aspects, the Multi-TB Repetition Module 1108 is configured to transmit the first number of repetitions of the first TB in one of more scheduled PDSCHs. In other aspects the Multi-TB Repetition Module 1108 is configured to receive the first number of repetitions of the first TB in one or more scheduled PUSCHs. In some aspects, the Multi-TB Repetition Module 1108 is configured to receive the first number of repetitions of the first TB in a CG resource, a semi-static resource, or a static resource.

In some aspects, the Multi-TB Repetition Module 1108 is configured to communicate the first number of repetitions based on a mapping type associated with at least one repetition of the first number of repetitions. For example, the Multi-TB Repetition Module 1108 is configured to communicate a first repetition of the first number of repetitions based on a first time-domain parameter(s) (e.g., SLIV) of the time-domain configuration, and may transmit the other repetition(s) of the first number of repetitions based on the mapping type indicated for the first TB, or of the first repetition of the first TB. In another aspect, the Multi-TB Repetition Module 1108 is configured to communicate the first number of repetitions based on a repetition type associated with at least one repetition of the first number of repetitions. For example, the Multi-TB Repetition Module 1108 may be configured to communicate a first repetition of the first number of repetitions based on a first time-domain parameter(s) (e.g., SLIV) of the time-domain configuration, and may communicate the other repetition(s) of the first number of repetitions based on the repetition type indicated for the first TB, or of the first repetition of the first TB. For example, for mapping type A, or repetition type A, the Multi-TB Repetition Module 1108 may be configured to communicate each repetition of the first number of repetitions in a different slot. For mapping type B, or repetition type B, the Multi-TB Repetition Module 1108 may be configured to communicate the remaining repetitions associated with the first TB back-to-back with the first repetition, and with a same length as the first repetition.

In another aspect, the Multi-TB Repetition Module 1108 is configured to communicate, with the UE based on the multi-TB repetition configuration and the time-domain configuration, the second number of repetitions of the second TB. In some aspects, the Multi-TB Repetition Module 1108 is configured to transmit the second number of repetitions of the second TB in one of more scheduled PDSCHs. In other aspects, the Multi-TB Repetition Module 1108 is configured to receive the second number of repetitions of the second TB in one or more scheduled PUSCHs. In some aspects, the Multi-TB Repetition Module 1108 is configured to communicate the second number of repetitions of the second TB in a CG resource, a semi-static resource, or a static resource. In some aspects, the Multi-TB Repetition Module 1108 is configured to communicate the second number of repetitions of the second TB sequentially with the first number of repetitions of the first TB. That is, in some aspects, the Multi-TB Repetition Module 1108 is configured to communicate the first number of repetitions of the first TB, and communicate the second number of repetitions of the second TB after transmitting the first number of repetitions of the first TB. In other aspects, the Multi-TB Repetition Module 1108 is configured to communicate the second number of repetitions interlaced with the first number of repetitions.

In some aspects, the Multi-TB Repetition Module 1108 is configured to communicate the second number of repetitions based on a mapping type associated with at least one repetition of the second number of repetitions. For example, the Multi-TB Repetition Module 1108 may be configured to communicate a first repetition of the second number of repetitions based on a second time-domain parameter(s) (e.g., SLIV) of the time-domain configuration, and may transmit the other repetition(s) of the second number of repetitions based on the mapping type indicated for the first TB, or of the first repetition of the second TB. In another aspect, the Multi-TB Repetition Module 1108 is configured to communicate the second number of repetitions based on a repetition type associated with at least one repetition of the second number of repetitions. For example, the Multi-TB Repetition Module 1108 may be configured to communicate a first repetition of the second number of repetitions based on a second time-domain parameter(s) (e.g., SLIV) of the time-domain configuration, and may transmit the other repetition(s) of the first number of repetitions based on the repetition type indicated for the second TB, or of the first repetition of the second TB. For example, for mapping type A, or repetition type A, the Multi-TB Repetition Module 1108 may communicate each repetition of the second number of repetitions in a different slot. For mapping type B, or repetition type B, the Multi-TB Repetition Module 1108 may communicate the remaining repetitions associated with the second TB back-to-back with the first repetition, and with a same length as the first repetition.

As explained above, in some aspects, the Multi-TB Repetition Module 1108 may be configured to communicate a same number of repetitions of each of the first TB and the second TB. In other aspects, the Multi-TB Repetition Module 1108 may be configured to communicate different numbers of repetitions of the first TB and the second TB. For example, in some aspects, the Multi-TB Repetition Module 1108 may be configured to transmit one or more indications of a TDRA entry, where each TDRA entry indicates a number of repetitions for each TB. Further, in some aspects, the Multi-TB Repetition Module 1108 may be configured with TB segmentation. For example, if the time-domain configuration of the first TB or the second TB causes a TB repetition to overlap a slot boundary, the Multi-TB Repetition Module 1108 may be configured to segment the overlapping TB repetition (which may be referred to as a nominal repetition) into two partial repetitions. The partial repetitions may be referred to as actual repetitions.

In another aspect, the Multi-TB Repetition Module 1108 may communicate a plurality of repetitions of the first TB and the second TB based on a time-domain configuration of the first TB. For example, the Multi-TB Repetition Module 1108 may communicate one or more repetitions of the first TB and one or more repetitions of the second TB based on a time-domain configuration of a first repetition of the first number of repetitions of the first TB. For example, the Multi-TB Repetition Module 1108 may communicate the repetitions other than the first repetition of the first TB based on a repetition type or mapping type indicated for the first TB, or for the first repetition of the first TB. In another aspect, the time-domain configuration may indicate time parameters (e.g., SLIV, mapping type, repetition type) for each repetition of each TB.

In another aspect, the Multi-TB Repetition Module 1108 may be configured to communicate a number of TBs based on a number of indicated transmission configuration indication (TCI) states. For example, in some aspects, the Multi-TB Repetition Module 1108 may determine the number of TBs for transmission based on a ratio of a number of parameters indicated in the time-domain configuration, and the number of indicated TCI states. For example, in one aspect, the number of TBs *N* to communicate is determined based on the relationship *N = floor(M*/*Q),* where *M* is the number of SLIVs in an indicated TDRA entry, and *Q* is the number of indicated TCI states. In another example, the number of TBs *N* may be determined based on the relationship *N = ceil(M*/*Q).* In one aspect, the number of repetitions for the first (N-1) TBs is equal to the number of indicated TCI states *Q*, and the number of repetitions for the last TB is equal to *M-*(*N-*1)**Q.* In another aspect, the number of repetitions for the first TB can be determined as *M-*(*N*-1)**Q ,* and the number of repetitions for the remaining (*N-*1) TBs is equal to the number of indicated TCI states *Q*. As explained above, the repetitions of the number of TBs determined based on the indicated TCI states may be mapped to the time resources sequentially or interlaced with each other. The mapping of the repetitions as either sequential or interlaced may be configured by RRC signaling.

As shown, the transceiver 1110 may include the modem subsystem 1112 and the RF unit 1114. The transceiver 1110 can be configured to communicate bi-directionally with other devices, such as the UEs 115 and/or 300 and/or another core network element. The modem subsystem 1112 may be configured to modulate and/or encode data according to a MCS, *e.g.,* a LDPC coding scheme, a turbo coding scheme, a convolutional coding scheme, a digital beamforming scheme, *etc.* The RF unit 1114 may be configured to process (*e.g*., perform analog to digital conversion or digital to analog conversion, *etc.*) modulated/encoded data (*e.g.,* configured grant information, parameters, bitmaps, other system and channel parameters, HARQ-ACK messages) from the modem subsystem 1112 (on outbound transmissions) or of transmissions originating from another source such as a UE 115 and/or UE 1000. The RF unit 1114 may be further configured to perform analog beamforming in conjunction with the digital beamforming. Although shown as integrated together in transceiver 1110, the modem subsystem 1112 and/or the RF unit 1114 may be separate devices that are coupled together at the BS 105 to enable the BS 105 to communicate with other devices.

The RF unit 1114 may provide the modulated and/or processed data, *e.g.* data packets (or, more generally, data messages that may contain one or more data packets and other information, such as TBs), to the antennas 1116 for transmission to one or more other devices. This may include, for example, transmission of information to complete attachment to a network and communication with a camped UE 115 or 1100 according to some aspects of the present disclosure. The antennas 1116 may further receive data messages transmitted from other devices and provide the received data messages for processing and/or demodulation at the transceiver 1110. The transceiver 1110 may provide the demodulated and decoded data (*e.g*., configured grant UL transmissions, PUSCH, multi-TB PUSCH) to the multi-TB repetition module 1108 for processing. The antennas 1116 may include multiple antennas of similar or different designs in order to sustain multiple transmission links. In an example, the transceiver 1110 is configured to transmit, to a UE, information or parameters regarding a configured grant resource, and communicate, with the UE, PUSCHs and HARQ-ACKs associated with HARQ processes and HARQ process IDs, for example, by coordinating with the Multi-TB Repetition Module 1108.

In an aspect, the BS 1100 can include multiple transceivers 1110 implementing different RATs (*e.g.,* NR and LTE). In an aspect, the BS 1100 can include a single transceiver 1110 implementing multiple RATs (*e.g.,* NR and LTE). In an aspect, the transceiver 1110 can include various components, where different combinations of components can implement different RATs.

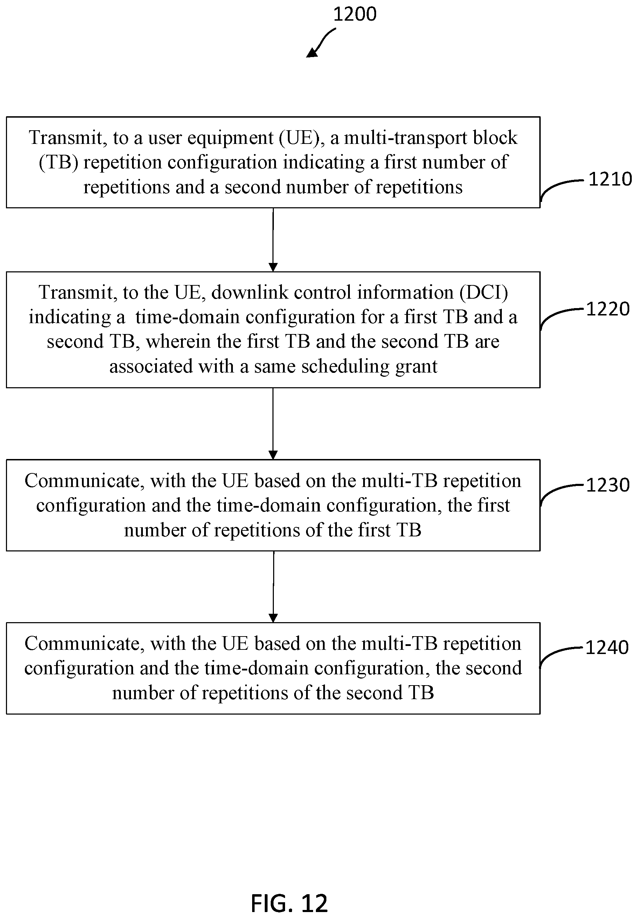

FIG. 12 is a flow diagram of a communication method 1200 according to some aspects of the present disclosure. Steps of the method 1200 can be executed by a computing device (e.g., a processor, processing circuit, and/or other suitable component) of an apparatus or other suitable means for performing the steps. For example, a BS, such as BSs 105 and/or 1100, may utilize one or more components, such as the processor 1102, the memory 1104, the Multi-TB Repetition Module 1108, the transceiver 1110, and the one or more antennas 1116, to execute the steps of method 1200. The method 1200 may employ similar mechanisms as described above with respect to FIGS. 2-7B. As illustrated, the method 1200 includes a number of enumerated steps, but aspects of the method 1200 may include additional steps before, after, and in between the enumerated steps. In some aspects, one or more of the enumerated steps may be omitted or performed in a different order.

At block 1210, the BS transmits, to a user equipment (UE), a multi-transport block (TB) repetition configuration indicating a first number of repetitions and a second number of repetitions. In some aspects, block 1210 may include transmitting a radio resource control (RRC) message including an RRC configuration. For example, the BS may transmit an RRC message indicating a *pdsch-AggregationFactor* or *pusch-AggregationFactor,* or any other suitable parameter, which indicates the first number of repetitions and the second number of repetitions. In another aspect, block 1210 may include the BS transmitting a time-domain resource allocation (TDRA) table including a plurality of rows, or entries. In some aspects, one or more rows or entries may include or indicate the first number of repetitions and/or the second number of repetitions. The TDRA entries may also include an index number associated with the entry, and one or more time-domain parameters (e.g., start and length indicator value (SLIV), starting symbol, length, etc.) associated with at least one repetition of the first TB, and at least one repetition of the second TB. In some aspects, the first number of repetitions may be associated with a first TB and the second number of repetitions may be associated with a second TB. The first TB and the second TB may be associated with a same scheduling grant, in some aspects. In other aspects, the first number of repetitions may be used for each of the first TB and the second TB. In some aspects, the BS determines the number of TBs by applying a floor operation to a ratio of the first parameter to the second parameter. In some aspects, the BS determines the number of TBs by applying a ceiling operation to a ratio of the first parameter to the second parameter. The BS may utilize one or more components, such as the processor 1102, the memory 1104, the Multi-TB Repetition Module 1108, the transceiver 1110, and the one or more antennas 1116, to execute the actions of block 1210.

At block 1220, the BS transmits, to the UE, DCI indicating a time-domain configuration for a first TB and a second TB, where the first TB and the second TB are associated with a same scheduling grant. In some aspects, block 1220 includes the BS indicating, via the DCI, an entry or row of a TDRA table. The TDRA table may be configured by the BS at block 1210, for example. The entry or row of the TDRA table may indicate various time-domain parameters associated with the multi-TB repetition communication. In some aspects, the time-domain indication may also indicate the first number of repetitions for the first TB, and the second number of repetitions for the second TB. In some aspects, the first number of repetitions may be a same value as the second number of repetitions, or a different value as the second number of repetitions. For example, in some aspects, both the first number of repetitions and the second number of repetitions may be 2. In another example, the first number of repetitions may be 3, and the second number of repetitions may be 1. The BS may utilize one or more components, such as the processor 1102, the memory 1104, the Multi-TB Repetition Module 1108, the transceiver 1110, and the one or more antennas 1116, to execute the actions of block 1220.

At block 1230, the BS communicates, with the UE based on the multi-TB repetition configuration and the time-domain configuration, the first number of repetitions of the first TB. In some aspects, block 1230 includes the BS transmitting the first number of repetitions of the first TB in one of more scheduled PDSCHs. In other aspects, block 1230 includes the UE transmitting the first number of repetitions of the first TB in one or more scheduled PUSCHs. In some aspects, block 1230 may include the UE transmitting the first number of repetitions of the first TB in a CG resource, a semi-static resource, or a static resource.

In some aspects, the BS communicates the first number of repetitions based on a mapping type associated with at least one repetition of the first number of repetitions. For example, the BS may communicate a first repetition of the first number of repetitions based on a first time-domain parameter(s) (e.g., SLIV) of the time-domain configuration, and may transmit the other repetition(s) of the first number of repetitions based on the mapping type indicated for the first TB, or of the first repetition of the first TB. In another aspect, the BS communicates the first number of repetitions based on a configured repetition type. For example, the BS may communicate a first repetition of the first number of repetitions based on a first time-domain parameter(s) (e.g., SLIV) of the time-domain configuration, and may transmit the other repetition(s) of the first number of repetitions based on the configured repetition type. For example, for mapping type A, or repetition type A, the BS may communicate each repetition of the first number of repetitions in a different slot. For mapping type B, or repetition type B, the BS may communicate the remaining repetitions associated with the first TB back-to-back with the first repetition, and with a same length as the first repetition. The BS may utilize one or more components, such as the processor 1102, the memory 1104, the Multi-TB Repetition Module 1108, the transceiver 1110, and the one or more antennas 1116, to execute the actions of block 1230.

At block 1240, the BS communicates, with the UE based on the multi-TB repetition configuration and the time-domain configuration, the second number of repetitions of the second TB. In some aspects, block 1240 includes the BS transmitting the second number of repetitions of the second TB in one of more scheduled PDSCHs. In other aspects, block 1240 includes the UE transmitting the second number of repetitions of the second TB in one or more scheduled PUSCHs. In some aspects, block 1240 may include the UE and/or the BS transmitting the second number of repetitions of the second TB in a CG resource, a semi-static resource, or a static resource. In some aspects, block 1240 includes communicating the second number of repetitions of the second TB sequentially with the first number of repetitions of the first TB. That is, in some aspects, the BS may communicate the first number of repetitions of the first TB, and communicate the second number of repetitions of the second TB after transmitting the first number of repetitions of the first TB. In other aspects, block 1240 includes communicating the second number of repetitions interlaced with the first number of repetitions. The BS may utilize one or more components, such as the processor 1102, the memory 1104, the Multi-TB Repetition Module 1108, the transceiver 1110, and the one or more antennas 1116, to execute the actions of block 1240.

In some aspects, the BS communicates the second number of repetitions based on a mapping type associated with at least one repetition of the second number of repetitions. For example, the BS may communicate a first repetition of the second number of repetitions based on a second time-domain parameter(s) (e.g., SLIV) of the time-domain configuration, and may transmit the other repetition(s) of the second number of repetitions based on the mapping type indicated for the first TB, or of the first repetition of the second TB. In another aspect, the BS communicates the second number of repetitions based on a configured repetition type. For example, the BS may communicate a first repetition of the second number of repetitions based on a second time-domain parameter(s) (e.g., SLIV) of the time-domain configuration, and may transmit the other repetition(s) of the first number of repetitions based on the configured repetition type. For example, for mapping type A, or repetition type A, the BS may communicate each repetition of the second number of repetitions in a different slot. For mapping type B, or repetition type B, the BS may communicate the remaining repetitions associated with the second TB back-to-back with the first repetition, and with a same length as the first repetition.

As explained above, in some aspects, blocks 1230 and 1240 include communicating a same number of repetitions of each of the first TB and the second TB. In other aspects, blocks 1230 and 1240 include communicating different numbers of repetitions of the first TB and the second TB. For example, in some aspects, block 1220 may include transmitting one or more indications of a TDRA entry, where each TDRA entry indicates a number of repetitions for each TB. Further, in some aspects, the BS may be configured with TB segmentation. For example, if the time-domain configuration of the first TB or the second TB causes a TB repetition to overlap a slot boundary, the BS may be configured to segment the overlapping TB repetition (which may be referred to as a nominal repetition) into two partial repetitions. The partial repetitions may be referred to as actual repetitions.

In another aspect, the BS may communicate a plurality of repetitions of the first TB and the second TB based on a time-domain configuration of the first TB. For example, the BS may communicate one or more repetitions of the first TB and one or more repetitions of the second TB based on a time-domain configuration of a first repetition of the first number of repetitions of the first TB. For example, the BS may communicate the repetitions other than the first repetition of the first TB based on a configured repetition type or a mapping type indicated for the first TB, or for the first repetition of the first TB. In another aspect, the time-domain configuration may indicate one or more time parameters (e.g., SLIV, mapping type) for each repetition of each TB.

In another aspect, the BS may be configured to communicate a number of TBs based on a number of indicated transmission configuration indication (TCI) states. For example, in some aspects, the BS may determine the number of TBs for transmission based on a ratio of a number of parameters indicated in the time-domain configuration, and the number of indicated TCI states. For example, in one aspect, the number of TBs *N* to communicate is determined based on the relationship *N = floor*(*M*/*Q*)*,* where *M* is the number of SLIVs in an indicated TDRA entry, and *Q* is the number of indicated TCI states. In another example, the number of TBs *N* may be determined based on the relationship *N = ceil(M*/*Q).* In one aspect, the number of repetitions for the first (N-1) TBs is equal to the number of indicated TCI states Q, and the number of repetitions for the last TB is equal to *M*-(*N-*1)**Q.* In another aspect, the number of repetitions for the first TB can be determined as *M-*(*N-*1)**Q ,* and the number of repetitions for the remaining (*N-*1) TBs is equal to the number of indicated TCI states Q. As explained above, the repetitions of the number of TBs determined based on the indicated TCI states may be mapped to the time resources sequentially or interlaced with each other. The mapping of the repetitions as either sequential or interlaced may be configured by RRC signaling.

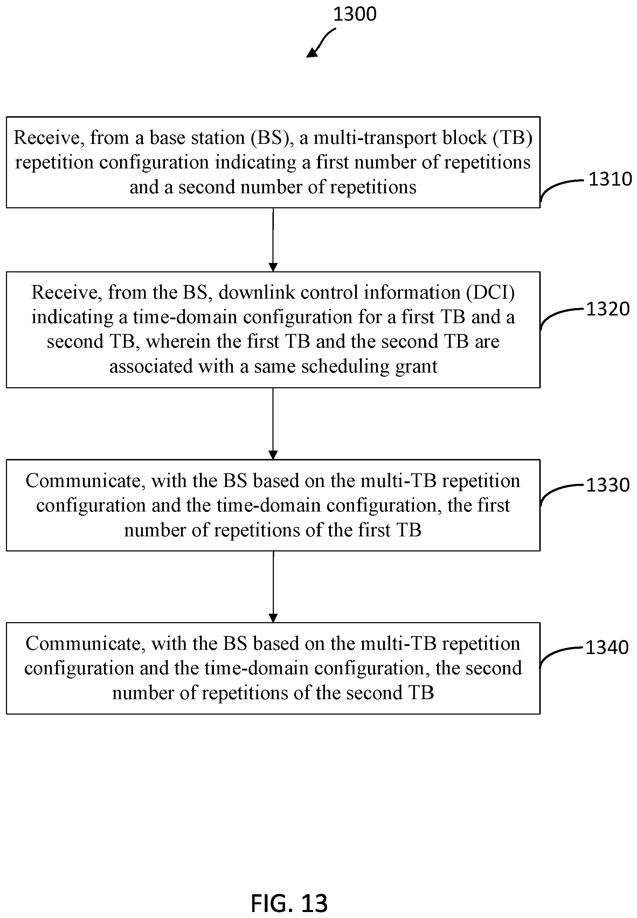

FIG. 13 is a flow diagram of a communication method 1300 according to some aspects of the present disclosure. Steps of the method 1300 can be executed by a computing device (e.g., a processor, processing circuit, and/or other suitable component) of an apparatus or other suitable means for performing the steps. For example, a UE, such as the UEs 115 and/or 1000, may utilize one or more components, such as the processor 1002, the memory 1004, the Multi-TB Repetition Module 1008, the transceiver 1010, and the one or more antennas 1016, to execute the steps of method 1300. The method 1300 may employ similar mechanisms as described above with respect to FIGS. 6-7B. As illustrated, the method 1300 includes a number of enumerated steps, but aspects of the method 1300 may include additional steps before, after, and in between the enumerated steps. In some aspects, one or more of the enumerated steps may be omitted or performed in a different order.

At block 1310, the UE receives, from a base station (BS), a multi-transport block (TB) repetition configuration indicating a first number of repetitions and a second number of repetitions. In some aspects, block 1310 may include receiving a radio resource control (RRC) message including an RRC configuration. For example, the UE may receive an RRC message indicating a *pdsch-AggregationFactor* or *pusch-AggregationFactor,* or any other suitable parameter, which indicates the first number of repetitions and the second number of repetitions. In another aspect, block 1310 may include the UE receiving a time-domain resource allocation (TDRA) table including a plurality of rows, or entries. In some aspects, one or more rows or entries may include or indicate the first number of repetitions and/or the second number of repetitions. The TDRA entries may also include an index number associated with the entry, and one or more time-domain parameters (e.g., start and length indicator value (SLIV), starting symbol, length, etc.) associated with at least one repetition of the first TB, and at least one repetition of the second TB. In some aspects, the first number of repetitions may be associated with a first TB and the second number of repetitions may be associated with a second TB. The first TB and the second TB may be associated with a same scheduling grant, in some aspects. In other aspects, the first number of repetitions may be used for each of the first TB and the second TB. In some aspects, the BS determines the number of TBs by applying a floor operation to a ratio of the first parameter to the second parameter. In some aspects, the BS determines the number of TBs by applying a ceiling operation to a ratio of the first parameter to the second parameter. The UE may utilize one or more components, such as the processor 1002, the memory 1004, the Multi-TB Repetition Module 1008, the transceiver 1010, and the one or more antennas 1016, to execute the actions of block 1310.

At block 1320, the UE receives, from the BS, DCI indicating a time-domain configuration for a first TB and a second TB, where the first TB and the second TB are associated with a same scheduling grant. In some aspects, block 1320 includes the BS indicating, via the DCI, an entry or row of a TDRA table. The TDRA table may be configured by the BS at block 1310, for example. The entry or row of the TDRA table may indicate various time-domain parameters associated with the multi-TB repetition communication. In some aspects, the time-domain indication may also indicate the first number of repetitions for the first TB, and the second number of repetitions for the second TB. In some aspects, the first number of repetitions may be a same value as the second number of repetitions, or a different value as the second number of repetitions. For example, in some aspects, both the first number of repetitions and the second number of repetitions may be 2. In another example, the first number of repetitions may be 3, and the second number of repetitions may be 1. The UE may utilize one or more components, such as the processor 1002, the memory 1004, the Multi-TB Repetition Module 1008, the transceiver 1010, and the one or more antennas 1016, to execute the actions of block 1320.

At block 1330, the UE communicates, with the BS based on the multi-TB repetition configuration and the time-domain configuration, the first number of repetitions of the first TB. In some aspects, block 1330 includes the UE receiving the first number of repetitions of the first TB in one of more scheduled PDSCHs. In other aspects, block 1330 includes the UE transmitting the first number of repetitions of the first TB in one or more scheduled PUSCHs. In some aspects, block 1330 may include the UE transmitting the first number of repetitions of the first TB in a CG resource, a semi-static resource, or a static resource.

In some aspects, the UE communicates the first number of repetitions based on a mapping type associated with at least one repetition of the first number of repetitions. For example, the UE may communicate a first repetition of the first number of repetitions based on a first time-domain parameter(s) (e.g., SLIV) of the time-domain configuration, and may communicate the other repetition(s) of the first number of repetitions based on the mapping type indicated for the first TB, or of the first repetition of the first TB. In another aspect, the UE communicates the first number of repetitions based on a configured repetition type. For example, the UE may communicate a first repetition of the first number of repetitions based on a first time-domain parameter(s) (e.g., SLIV) of the time-domain configuration, and may transmit the other repetition(s) of the first number of repetitions based on the configured repetition type. For example, for mapping type A, or repetition type A, the UE may communicate each repetition of the first number of repetitions in a different slot. For mapping type B, or repetition type B, the UE may communicate the remaining repetitions associated with the first TB back-to-back with the first repetition, and with a same length as the first repetition. The UE may utilize one or more components, such as the processor 1002, the memory 1004, the Multi-TB Repetition Module 1008, the transceiver 1010, and the one or more antennas 1016, to execute the actions of block 1330.

At block 1340, the UE communicates, with the BS based on the multi-TB repetition configuration and the time-domain configuration, the second number of repetitions of the second TB. In some aspects, block 1340 includes the UE receiving the second number of repetitions of the second TB in one of more scheduled PDSCHs. In other aspects, block 1340 includes the UE communicating the second number of repetitions of the second TB in one or more scheduled PUSCHs. In some aspects, block 1340 may include the UE and/or the BS transmitting the second number of repetitions of the second TB in a CG resource, a semi-static resource, or a static resource. In some aspects, block 1340 includes communicating the second number of repetitions of the second TB sequentially with the first number of repetitions of the first TB. That is, in some aspects, the UE may communicate the first number of repetitions of the first TB, and communicate the second number of repetitions of the second TB after transmitting the first number of repetitions of the first TB. In other aspects, block 1340 includes communicating the second number of repetitions interlaced with the first number of repetitions. The UE may utilize one or more components, such as the processor 1002, the memory 1004, the Multi-TB Repetition Module 1008, the transceiver 1010, and the one or more antennas 1016, to execute the actions of block 1340.

In some aspects, the UE communicates the second number of repetitions based on a mapping type associated with at least one repetition of the second number of repetitions. For example, the UE may communicate a first repetition of the second number of repetitions based on a second time-domain parameter(s) (e.g., SLIV) of the time-domain configuration, and may transmit the other repetition(s) of the second number of repetitions based on the mapping type indicated for the first TB, or of the first repetition of the second TB. In another aspect, the UE communicates the second number of repetitions based on a repetition type associated with at least one repetition of the first number of repetitions. For example, the UE may communicate a first repetition of the second number of repetitions based on a second time-domain parameter(s) (e.g., SLIV) of the time-domain configuration, and may transmit the other repetition(s) of the first number of repetitions based on the repetition type indicated for the second TB, or of the first repetition of the second TB. For example, for mapping type A, or repetition type A, the UE may communicate each repetition of the second number of repetitions in a different slot. For mapping type B, or repetition type B, the UE may communicate the remaining repetitions associated with the second TB back-to-back with the first repetition, and with a same length as the first repetition.

As explained above, in some aspects, blocks 1330 and 1340 include communicating a same number of repetitions of each of the first TB and the second TB. In other aspects, blocks 1330 and 1340 include communicating different numbers of repetitions of the first TB and the second TB. For example, in some aspects, block 1320 may include receiving one or more indications of a TDRA entry, where each TDRA entry indicates a number of repetitions for each TB. Further, in some aspects, the UE may be configured with TB segmentation. For example, if the time-domain configuration of the first TB or the second TB causes a TB repetition to overlap a slot boundary, the UE may be configured to segment the overlapping TB repetition (which may be referred to as a nominal repetition) into two partial repetitions. The partial repetitions may be referred to as actual repetitions.

In another aspect, the UE may communicate a plurality of repetitions of the first TB and the second TB based on a time-domain configuration of the first TB. For example, the UE may communicate one or more repetitions of the first TB and one or more repetitions of the second TB based on a time-domain configuration of a first repetition of the first number of repetitions of the first TB. In some aspects, the UE may communicate the repetitions other than the first repetition of the first TB based on a repetition type or a mapping type indicated for the first TB, or for the first repetition of the first TB. In another aspect, the time-domain configuration may indicate time parameters (e.g., SLIV, mapping type) for each repetition of each TB.

In another aspect, the UE may be configured to communicate a number of TBs based on a number of indicated transmission configuration indication (TCI) states. For example, in some aspects, the UE may determine the number of TBs for transmission based on a ratio of a number of parameters indicated in the time-domain configuration, and the number of indicated TCI states. For example, in one aspect, the UE determines the number of TBs *N* to communicate based on the relationship *N = floor*(*M*/*Q*)*,* where *M* is the number of SLIVs in an indicated TDRA entry, and *Q* is the number of indicated TCI states. In another example, the UE determines the number of TBs *N* based on the relationship *N = ceil*(*M*/*Q*)*.* In one aspect, the number of repetitions for the first (N-1) TBs is equal to the number of indicated TCI states *Q*, and the number of repetitions for the last TB is equal to *M-(*N*-*1)**Q.* In another aspect, the number of repetitions for the first TB can be determined as *M*-(*N*-1)**Q ,* and the number of repetitions for the remaining (*N*-1) TBs is equal to the number of indicated TCI states *Q*. As explained above, the repetitions of the number of TBs determined based on the indicated TCI states may be mapped to the time resources sequentially or interlaced with each other. The mapping of the repetitions as either sequential or interlaced may be configured by RRC signaling.

In another aspect, the UE may receive and/or decode the first number of repetitions and second number of repetitions based on a rule or configuration. For example, in some aspects, the UE may receive and/or decode the second number of repetitions based on an assumption that the SLIV of the first repetition of the second TB is after the final repetition of the first number of repetitions of the first TB. In another aspect, the UE may drop any remaining repetitions of a first TB if the SLIV of the first repetition of the second TB overlaps or precedes any repetition of the first TB.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a DSP, an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (*e.g.,* a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations. Also, as used herein, including in the claims, "or" as used in a list of items (for example, a list of items prefaced by a phrase such as "at least one of" or "one or more of') indicates an inclusive list such that, for example, a list of [at least one of A, B, or C] means A or B or C or AB or AC or BC or ABC (*i.e.,* A and B and C).

The scope of protection is defined by the appended claims.

## Claims

1. A method of wireless communication performed by a user equipment UE (115, 215), the method comprising:
receiving (802), from a base station BS (105), a multi-transport block TB repetition configuration indicating a first number of repetitions and a second number of repetitions;
receiving (804), from the BS (105), downlink control information DCI indicating a time-domain configuration for a first TB and a second TB, wherein the first TB and the second TB are associated with a same scheduling grant;
communicating, with the BS based on the multi-TB repetition configuration and the time-domain configuration;
the first number of repetitions of the first TB; and the second number of repetitions of the second TB, **characterized in that** the communicating the first number of repetitions of the first TB and the communicating the second number of repetitions of the second TB comprises:
communicating a first plurality of interlaced repetitions of the first TB and the second TB in a first physical shared channel; and
communicating a second plurality of interlaced repetitions of the first TB and the second TB in a second physical shared channel.

2. The method of claim 1, wherein the receiving the multi-TB repetition configuration comprises receiving a radio resource control RRC configuration indicating the multi-TB repetition configuration; or wherein the receiving the multi-TB repetition configuration comprises the receiving the DCI indicating the multi-TB repetition configuration.

3. The method of claim 1, wherein the receiving the multi-TB repetition configuration comprises receiving a single parameter indicating a same number of repetitions for each of the first TB and the second TB; or wherein the receiving the multi-TB repetition configuration comprises receiving a first parameter indicating the first number of repetitions for the first TB and a different second parameter indicating the second number of repetitions for the second TB.

4. The method of claim 1, wherein the time-domain configuration comprises a first time-domain resource allocation associated with a first TB and a second time-domain resource allocation associated with a second TB; or the time-domain configuration comprises a single time-domain resource allocation for each of the first TB and the second TB.

5. The method of claim 1, wherein the time-domain configuration comprises a first time-domain resource allocation associated with a first repetition of the first TB, a second time-domain resource allocation associated with a second repetition of the first TB, a third time-domain resource allocation associated with a first repetition of the second TB and a fourth time-domain resource allocation associated with a second repetition of the second TB.

6. The method of claim 1, wherein:
the communicating the first number of repetitions of the first TB comprises:
communicating the first number of repetitions of the first TB in a first physical shared channel; and
the communicating the second number of repetitions of the second TB comprises:
communicating the second number of repetitions of the second TB in a second physical shared channel after communicating the first number of repetitions of the first TB.

7. The method of claim 6, wherein:
the time-domain configuration indicates:
a first mapping type and a first start and length indicator value SLIV for a first repetition of the first TB;
a second mapping type and a second SLIV for a second repetition of the first TB;
a third mapping type and a third SLIV for a first repetition of the second TB; and
a fourth mapping type and a fourth SLIV for a second repetition of the second TB;
the communicating the first number of repetitions of the first TB comprises:
communicating the first repetition of the first TB based on the first mapping type and the first SLIV;
communicating the second repetition of the first TB based on the second mapping type and the second SLIV; and
the communicating the second number of repetitions of the second TB comprises:
communicating the first repetition of the second TB based on the third mapping type and the third SLIV; and
communicating the second repetition of the second TB based on the fourth mapping type and the fourth SLIV.

8. The method of claim 1, wherein:
the time-domain configuration indicates:
a first mapping type and a first start and length indicator value SLIV; and
a second mapping type and a second SLIV; and
the communicating the first plurality of interlaced repetitions comprises:
communicating a first repetition of the first plurality of interlaced repetitions and a first repetition of the second plurality of interlaced repetitions based on the first mapping type and the first SLIV; and
communicating a second repetition of the first plurality of interlaced repetitions and a second repetition of the second plurality of interlaced repetitions based on the second mapping type and the second SLIV.

9. The method of claim 1, wherein:
the time-domain configuration indicates:
a first mapping type and a first start and length indicator value SLIV for a first repetition of the first TB;
a second mapping type and a second SLIV for a second repetition of the first TB;
a third mapping type and a third SLIV for a first repetition of the second TB; and
a fourth mapping type and a fourth SLIV for a second repetition of the second TB; and
the communicating the first plurality of interlaced repetitions comprises:
communicating the first repetition of the first TB based on the first mapping type and the first SLIV;
communicating the first repetition of the second TB based on the third mapping type and the third SLIV; and
the communicating the second plurality of interlaced repetitions comprises:
communicating the second repetition of the first TB based on the second mapping type and second SLIV; and
communicating the second repetition of the second TB based on the fourth mapping type and the fourth SLIV.

10. The method of claim 1, wherein:
the time-domain configuration indicates a first mapping type and a first start and length indicator value SLIV for a first repetition of the first plurality of interlaced repetitions; and
the communicating the first plurality of interlaced repetitions and the communicating the second plurality of interlaced repetitions is based on the first mapping type and the first SLIV.

11. The method of claim 10, wherein the receiving the first plurality of interlaced repetitions comprises receiving a nominal repetition overlapping a slot boundary.

12. The method of claim 1, wherein:
the DCI indicates a number of activated transmission configuration indicator TCI states,
the method further comprises:
determining, based on the number of activated TCI states, a number of TBs, wherein the number of TBs includes the first TB and the second TB; and
communicating, with the BS, the number of TBs, wherein the communicating the number of TBs comprises:
the communicating the first number of repetitions of the first TB; and
the communicating the second number of repetitions of the second TB.

13. The method of claim 12, wherein:
the DCI indicates a number of start and length indicator values SLIVs, and
the determining the number of TBs is based on a ratio of the number of SLIVs to the number of activated TCI states.

14. The method of claim 1, wherein:
the communicating the first number of repetitions of the first TB comprises either receiving either a first number of downlink DL repetitions of the first TB or transmitting a first number of uplink UL repetitions of the first TB ; and
the communicating the second number of repetitions of the second TB comprises either receiving a second number of DL repetitions of the second TB or transmitting a second number of UL repetitions of the second TB.

15. A method of wireless communication performed by a base station BS (105), the method comprising:
transmitting, to a user equipment UE (115), a multi-transport block TB repetition configuration indicating a first number of repetitions and a second number of repetitions;
transmitting, to the UE (115), downlink control information DCI indicating a time-domain configuration for a first TB and a second TB, wherein the first TB and the second TB are associated with a same scheduling grant;
communicating, with the UE (115) based on the multi-TB repetition configuration and the time-domain configuration:
the first number of repetitions of the first TB; and
the second number of repetitions of the second TB,
**characterized in that** the communicating the first number of repetitions of the first TB and the communicating the second number of repetitions of the second TB comprises:
communicating a first plurality of interlaced repetitions of the first TB and the second TB in a first physical shared channel; and
communicating a second plurality of interlaced repetitions of the first TB and the second TB in a second physical shared channel.

## Patentansprüche

1. Ein Verfahren für eine drahtlose Kommunikation, das durch ein Benutzergerät (User Equipment bzw. UE) (115, 215) durchgeführt wird, wobei das Verfahren aufweist:
Empfangen (802), von einer Basisstation (BS) (105), einer Multi-Transportblock (TB)-Wiederholungskonfiguration, die eine erste Anzahl von Wiederholungen und eine zweite Anzahl von Wiederholungen angibt,
Empfangen (804), von der BS (105), von Abwärtsstrecke-Steuerinformationen (Downlink Control Information bzw. DCI), die eine Zeitdomänenkonfiguration für einen ersten TB und einen zweiten TB angeben, wobei der erste TB und der zweite TB mit einer gleichen Planungsgewährung bzw. -zuteilung assoziiert sind,
Kommunizieren mit der BS basierend auf der Multi-TB-Wiederholungskonfiguration und der Zeitdomänenkonfiguration:
der ersten Anzahl von Wiederholungen des ersten TB, und
der zweiten Anzahl von Wiederholungen des zweiten TB,
**dadurch gekennzeichnet, dass** das Kommunizieren der ersten Anzahl von Wiederholungen des ersten TB und das Kommunizieren der zweiten Anzahl von Wiederholungen des zweiten TB aufweisen:
Kommunizieren einer ersten Vielzahl von verschachtelten bzw. im Zeilensprungverfahren gestaffelten Wiederholungen des ersten TB und des zweiten TB in einem ersten gemeinsamen physikalischen Kanal, und
Kommunizieren einer zweiten Vielzahl von verschachtelten Wiederholungen des ersten TB und des zweiten TB in einem zweiten gemeinsamen physikalischen Kanal.

2. Verfahren nach Anspruch 1, wobei das Empfangen der Multi-TB-Wiederholungskonfiguration das Empfangen einer Funkressourcensteuerung (Radio Resource Control bzw. RRC)-Konfiguration, die die Multi-TB-Wiederholungskonfiguration angibt, aufweist oder wobei das Empfangen der Multi-TB-Wiederholungskonfiguration das Empfangen der DCI, die die Multi-TB-Wiederholungskonfiguration angeben, aufweist.

3. Verfahren nach Anspruch 1, wobei das Empfangen der Multi-TB-Wiederholungskonfiguration das Empfangen eines einzelnen Parameters, der eine gleiche Anzahl von Wiederholungen für jeweils den ersten TB und den zweiten TB angibt, aufweist oder wobei das Empfangen der Multi-TB-Wiederholungskonfiguration das Empfangen eines ersten Parameters, der die erste Anzahl von Wiederholungen für den ersten TB angibt, und eines davon verschiedenen zweiten Parameters, der die zweite Anzahl von Wiederholungen für den zweiten TB angibt, aufweist.

4. Verfahren nach Anspruch 1, wobei die Zeitdomänenkonfiguration eine erste Zeitdomänen-Ressourcenzuweisung, die mit einem ersten TB assoziiert ist, und eine zweite Zeitdomänen-Ressourcenzuweisung, die mit einem zweiten TB assoziiert ist, aufweist oder wobei die Zeitdomänenkonfiguration eine einzelne Zeitdomänen-Ressourcenzuweisung für sowohl den ersten TB als auch den zweiten TB aufweist.

5. Verfahren nach Anspruch 1, wobei die Zeitdomänenkonfiguration eine erste Zeitdomänen-Ressourcenzuweisung, die mit einer ersten Wiederholung des ersten TB assoziiert ist, eine zweite Zeitdomänen-Ressourcenzuweisung, die mit einer zweiten Wiederholung des ersten TB assoziiert ist, eine dritte Zeitdomänen-Ressourcenzuweisung, die mit einer ersten Wiederholung des zweiten TB assoziiert ist, und eine vierte Zeitdomänen-Ressourcenzuweisung, die mit einer zweiten Wiederholung des zweiten TB assoziiert ist, aufweist.

6. Verfahren nach Anspruch 1, wobei:
das Kommunizieren der ersten Anzahl von Wiederholungen des ersten TB aufweist:
Kommunizieren der ersten Anzahl von Wiederholungen des ersten TB in einem ersten gemeinsamen physikalischen Kanal, und
das Kommunizieren der zweiten Anzahl von Wiederholungen des zweiten TB aufweist:
Kommunizieren der zweiten Anzahl von Wiederholungen des zweiten TB in einem zweiten gemeinsamen physikalischen Kanal nach dem Kommunizieren der ersten Anzahl von Wiederholungen des ersten TB.

7. Verfahren nach Anspruch 6, wobei:
die Zeitdomänenkonfiguration angibt:
einen ersten Mapping-Typ und einen ersten Start- und Längenindikatorwert (Start and Length Indicator Value bzw. SLIV) für eine erste Wiederholung des ersten TB,
einen zweiten Mapping-Typ und einen zweiten SLIV für eine zweite Wiederholung des ersten TB,
einen dritten Mapping-Typ und einen dritten SLIV für eine erste Wiederholung des zweiten TB, und
einen vierten Mapping-Typ und einen vierten SLIV für eine zweite Wiederholung des zweiten TB,
wobei das Kommunizieren der ersten Anzahl von Wiederholungen des ersten TB aufweist:
Kommunizieren der ersten Wiederholung des ersten TB basierend auf dem ersten Mapping-Typ und dem ersten SLIV,
Kommunizieren der zweiten Wiederholung des ersten TB basierend auf dem zweiten Mapping-Typ und dem zweiten SLIV, und
wobei das Kommunizieren der zweiten Anzahl von Wiederholungen des zweiten TB aufweist:
Kommunizieren der ersten Wiederholung des zweiten TB basierend auf dem dritten Mapping-Typ und dem dritten SLIV, und
Kommunizieren der zweiten Wiederholung des zweiten TB basierend auf dem vierten Mapping-Typ und dem vierten SLIV.

8. Verfahren nach Anspruch 1, wobei:
die Zeitdomänen-Konfiguration angibt:
einen ersten Mapping-Typ und einen ersten Start- und Längenindikatorwert (Start and Length Indicator Value bzw. SLIV), und
einen zweiten Mapping-Typ und einen zweiten SLIV, und
das Kommunizieren der ersten Vielzahl von verschachtelten Wiederholungen aufweist:
Kommunizieren einer ersten Wiederholung der ersten Vielzahl von verschachtelten Wiederholungen und einer ersten Wiederholung der zweiten Vielzahl von verschachtelten Wiederholungen basierend auf dem ersten Mapping-Typ und dem ersten SLIV, und
Kommunizieren einer zweiten Wiederholung der ersten Vielzahl von verschachtelten Wiederholungen und einer zweiten Wiederholung der zweiten Vielzahl von verschachtelten Wiederholungen basierend auf dem zweiten Mapping-Typ und dem zweiten SLIV.

9. Verfahren nach Anspruch 1, wobei:
die Zeitdomänen-Konfiguration angibt:
einen ersten Mapping-Typ und einen ersten Start- und Längenindikatorwert (Start and Length Indicator Value bzw. SLIV) für eine erste Wiederholung des ersten TB,
einen zweiten Mapping-Typ und einen zweiten SLIV für eine zweite Wiederholung des ersten TB,
einen dritten Mapping-Typ und einen dritten SLIV für eine erste Wiederholung des zweiten TB, und
einen vierten Mapping-Typ und einen vierten SLIV für eine zweite Wiederholung des zweiten TB, und
das Kommunizieren der ersten Vielzahl von verschachtelten Wiederholungen aufweist:
Kommunizieren der ersten Wiederholung des ersten TB basierend auf dem ersten Mapping-Typ und dem ersten SLIV,
Kommunizieren der ersten Wiederholung des zweiten TB basierend auf dem dritten Mapping-Typ und dem dritten SLIV, und
das Kommunizieren der zweiten Vielzahl von verschachtelten Wiederholungen aufweist:
Kommunizieren der zweiten Wiederholung des ersten TB basierend auf dem zweiten Mapping-Typ und dem zweiten SLIV, und
Kommunizieren der zweiten Wiederholung des zweiten TB basierend auf dem vierten Mapping-Typ und dem vierten SLIV.

10. Verfahren nach Anspruch 1, wobei:
die Zeitdomänen-Konfiguration einen ersten Mapping-Typ und einen ersten Start- und Längenindikatorwert (Start and Length Indicator Value bzw. SLIV) für eine erste Wiederholung der ersten Vielzahl von verschachtelten Wiederholungen angibt, und
das Kommunizieren der ersten Vielzahl von verschachtelten Wiederholungen und das Kommunizieren der zweiten Vielzahl von verschachtelten Wiederholungen auf dem ersten Mapping-Typ und dem ersten SLIV basiert.

11. Verfahren nach Anspruch 10, wobei das Empfangen der ersten Vielzahl von verschachtelten Wiederholungen das Empfangen einer nominalen Wiederholung, die eine Schlitzgrenze überlappt, aufweist.

12. Verfahren nach Anspruch 1, wobei:
die DCI eine Anzahl von aktivierten Sendungskonfigurationsindikator (Transmission Configuration Indicator bzw. TCI)-Zuständen angeben, und
das Verfahren weiterhin aufweist:
Bestimmen, basierend auf der Anzahl von aktivierten TCI-Zuständen, einer Anzahl von TBs, wobei die Anzahl von TBs das erste TB und das zweite TB enthält, und
Kommunizieren, mit der BS, der Anzahl von TBs, wobei das Kommunizieren der Anzahl von TBs aufweist:
das Kommunizieren der ersten Anzahl von Wiederholungen des ersten TB, und
das Kommunizieren der zweiten Anzahl von Wiederholungen des zweiten TB.

13. Verfahren nach Anspruch 12, wobei:
die DCI eine Anzahl von Start- und Längenindikatorwerten (Start and Length Indicator Values bzw. SLIVs) angeben, und
das Bestimmen der Anzahl von TBs auf einem Verhältnis der Anzahl von SLIVs zu der Anzahl von aktivierten TCI-Zuständen basiert.

14. Verfahren nach Anspruch 1, wobei:
das Kommunizieren der ersten Anzahl von Wiederholungen des ersten TB entweder das Empfangen einer ersten Anzahl von Abwärtsstrecke (Downlink bzw. DL)-Wiederholungen des ersten TB oder das Senden einer ersten Anzahl von Aufwärtsstrecke (Uplink bzw. UL)-Wiederholungen des ersten TB aufweist, und
das Kommunizieren der zweiten Anzahl von Wiederholungen des zweiten TB entweder das Empfangen einer zweiten Anzahl von DL-Wiederholungen des zweiten TB oder das Senden einer zweiten Anzahl von UL-Wiederholungen des zweiten TB aufweist.

15. Ein Verfahren für eine drahtlose Kommunikation, das durch eine Basisstation (BS) (105) durchgeführt wird, wobei das Verfahren aufweist:
Senden, an ein Benutzergerät (User Equipment bzw. UE) (115), einer Multi-Transportblock (TB)-Wiederholungskonfiguration, die eine erste Anzahl von Wiederholungen und eine zweite Anzahl von Wiederholungen angibt,
Senden, an das UE (115), von Abwärtsstrecke-Steuerinformationen (Downlink Control Information bzw. DCI), die eine Zeitdomänenkonfiguration für einen ersten TB und einen zweiten TB angeben, wobei der erste TB und der zweite TB mit einer gleichen Planungsgewährung assoziiert sind,
Kommunizieren mit dem UE (115) basierend auf der Multi-TB-Wiederholungskonfiguration und der Zeitdomänenkonfiguration:
der ersten Anzahl von Wiederholungen des ersten TB, und
der zweiten Anzahl von Wiederholungen des zweiten TB,
**dadurch gekennzeichnet, dass** das Kommunizieren der ersten Anzahl von Wiederholungen des ersten TB und das Kommunizieren der zweiten Anzahl von Wiederholungen des zweiten TB aufweist:
Kommunizieren einer ersten Vielzahl von verschachtelten bzw. im Zeilensprungverfahren gestaffelten Wiederholungen des ersten TB und des zweiten TB in einem ersten gemeinsamen physikalischen Kanal, und
Kommunizieren einer zweiten Vielzahl von verschachtelten Wiederholungen des ersten TB und des zweiten TB in einem zweiten gemeinsamen physikalischen Kanal.

## Revendications

1. Procédé de communication sans fil effectué par un équipement utilisateur UE (115, 215), le procédé comprenant les étapes consistant à :
recevoir (802), d'une station de base BS (105), une configuration de répétition de bloc multi-transport TB indiquant un premier nombre de répétitions et un second nombre de répétitions ;
recevoir (804), de la BS (105), des informations de commande de liaison descendante DCI indiquant une configuration de domaine temporel pour un premier TB et un second TB, dans lequel le premier TB et le second TB sont associés à une même attribution de planification ;
communiquer, avec la BS sur la base de la configuration de répétition multi-TB et de la configuration de domaine temporel ;
le premier nombre de répétitions du premier TB ; et le second nombre de répétitions du second TB, **caractérisé en ce que**
la communication du premier nombre de répétitions du premier TB et la communication du second nombre de répétitions du second TB comprend les étapes consistant à :
communiquer une première pluralité de répétitions entrelacées du premier TB et du second TB dans un premier canal physique partagé ; et
communiquer une seconde pluralité de répétitions entrelacées du premier TB et du second TB dans un second canal physique partagé

2. Le procédé selon la revendication 1, dans lequel la réception de la configuration de répétition multi-TB comprend la réception d'une configuration RRC de contrôle de ressource radio indiquant la configuration de répétition multi-TB ; ou dans lequel la réception de la configuration de répétition multi-TB comprend la réception du DCI indiquant la configuration de répétition multi-TB.

3. Le procédé de la revendication 1, dans lequel la réception de la configuration de répétition multi-TB comprend la réception d'un seul paramètre indiquant un même nombre de répétitions pour chacun du premier TB et du second TB ; ou dans lequel la réception de la configuration de répétition multi-TB comprend la réception d'un premier paramètre indiquant le premier nombre de répétitions pour le premier TB et d'un second paramètre différent indiquant le second nombre de répétitions pour le second TB.

4. Le procédé selon la revendication 1, dans lequel la configuration du domaine temporel comprend une première allocation de ressources du domaine temporel associée à un premier TB et une seconde allocation de ressources du domaine temporel associée à un second TB ; ou la configuration du domaine temporel comprend une seule allocation de ressources du domaine temporel pour chacun du premier TB et du second TB

5. Le procédé de la revendication 1, dans lequel la configuration du domaine temporel comprend une première allocation de ressources du domaine temporel associée à une première répétition du premier TB, une deuxième allocation de ressources du domaine temporel associée à une deuxième répétition du premier TB, une troisième allocation de ressources du domaine temporel associée à une première répétition du deuxième TB et une quatrième allocation de ressources du domaine temporel associée à une deuxième répétition du deuxième TB

6. Le procédé de la revendication 1, dans lequel :
la communication du premier nombre de répétitions du premier TB comprend l'étape consistant à :
communiquer le premier nombre de répétitions du premier TB dans un premier canal physique partagé ; et
la communication du deuxième nombre de répétitions du deuxième TB comprend l'étape consistant à :
communiquer le deuxième nombre de répétitions du deuxième TB dans un deuxième canal physique partagé après avoir communiqué le premier nombre de répétitions du premier TB.

7. Le procédé selon la revendication 6, dans lequel :
la configuration du domaine temporel indique :
un premier type de mappage et une première valeur d'indicateur de début et de longueur SLIV pour une première répétition du premier TB ;
un deuxième type de mappage et un deuxième SLIV pour une deuxième répétition du premier TB ;
un troisième type de mappage et un troisième SLIV pour une première répétition du deuxième TB ; et un quatrième type de mappage et
un quatrième SLIV pour une deuxième répétition du deuxième TB,
la communication du premier nombre de répétitions du premier TB comprend l'étape consistant à :
communiquer la première répétition du premier TB sur la base du premier type de mappage et du premier SLIV ;
communiquer la deuxième répétition du premier TB sur la base du deuxième type de mappage et du deuxième SLIV ; et
la communication du deuxième nombre de répétitions du deuxième TB comprend :
la communication de la première répétition du deuxième TB sur la base du troisième type de mappage et du troisième SLIV ; et
la communication de la deuxième répétition du deuxième TB sur la base du quatrième type de mappage et du quatrième SLIV.

8. Le procédé selon la revendication 1, dans lequel :
la configuration du domaine temporel indique :
un premier type de mappage et une première valeur d'indicateur de début et de longueur SLIV ; et
un deuxième type de mappage et une deuxième SLIV ; et la communication de la première pluralité de répétitions entrelacées comprend les étapes consistant à :
communiquer une première répétition de la première pluralité de répétitions entrelacées et une première répétition de la deuxième pluralité de répétitions entrelacées sur la base du premier type de mappage et du premier SLIV ; et
communiquer une deuxième répétition de la première pluralité de répétitions entrelacées et une deuxième répétition de la deuxième pluralité de répétitions entrelacées sur la base du deuxième type de mappage et du deuxième SLIV.

9. Le procédé selon la revendication 1, dans lequel :
la configuration du domaine temporel indique :
un premier type de mappage et une première valeur d'indicateur de début et de longueur SLIV pour une première répétition du premier TB ;
un deuxième type de mappage et une deuxième SLIV pour une deuxième répétition du premier TB
un troisième type de mappage et un troisième SLIV pour une première répétition du deuxième TB ; et un quatrième type de mappage et
un quatrième SLIV pour une deuxième répétition du deuxième TB, et
la communication de la première pluralité de répétitions entrelacées comprend les étapes consistant à :
communiquer la première répétition du premier TB sur la base du premier type de mappage et du premier SLIV ;
communiquer la première répétition du deuxième TB sur la base du troisième type de mappage et du troisième SLIV ; et
la communication de la deuxième pluralité de répétitions entrelacées comprend les étapes consistant à :
communiquer la deuxième répétition du premier TB sur la base du deuxième type de mappage et du deuxième SLIV ; et
communiquer la deuxième répétition du deuxième TB sur la base du quatrième type de mappage et du quatrième SLIV.

10. Procédé selon la revendication 1, dans lequel :
la configuration du domaine temporel indique un premier type de mappage et une première valeur d'indicateur de début et de longueur SLIV pour une première répétition de la première pluralité de répétitions entrelacées ; et la communication de la première pluralité de répétitions entrelacées et la communication de la deuxième pluralité de répétitions entrelacées est basée sur le premier type de mappage et le premier SLIV.

11. Le procédé selon la revendication 10, dans lequel la réception de la première pluralité de répétitions entrelacées comprend la réception d'une répétition nominale chevauchant une limite de créneau.

12. Le procédé selon la revendication 1, dans lequel :
le DCI indique un nombre d'états TCI d'indicateur de configuration de transmission activés, le procédé comprend en outre les étapes consistant à :
déterminer, sur la base du nombre d'états TCI activés, un nombre de TB, dans lequel le nombre de TB comprend le premier TB et le second TB ; et
communiquer, avec le BS, le nombre de TB, dans lequel la communication du nombre de TB comprend :
la communication du premier nombre de répétitions du premier TB ; et la communication du deuxième nombre de répétitions du deuxième TB

13. Le procédé selon la revendication 12, dans lequel :
le DCI indique un nombre de valeurs d'indicateur de début et de longueur SLIV, et la détermination du nombre de TB est basée sur un rapport du nombre de SLIV au nombre d'états TCI activés.

14. Le procédé selon la revendication 1, dans lequel :
la communication du premier nombre de répétitions du premier TB comprend soit la réception d'un premier nombre de répétitions DL en liaison descendante du premier TB, soit la transmission d'un premier nombre de répétitions UL en liaison montante du premier TB ; et
la communication du deuxième nombre de répétitions du deuxième TB comprend soit la réception d'un deuxième nombre de répétitions DL du deuxième TB, soit la transmission d'un deuxième nombre de répétitions UL du deuxième TB

15. Procédé de communication sans fil effectué par une station de base BS (105), le procédé comprenant les étapes consistant à :
transmettre, à un équipement utilisateur UE (115), une configuration de répétition de bloc multi-transport TB indiquant un premier nombre de répétitions et un second nombre de répétitions ;
transmettre, à l'UE (115), des informations de commande de liaison descendante DCI indiquant une configuration de domaine temporel pour un premier TB et un second TB, dans lequel le premier TB et le second TB sont associés à une même attribution de planification ;
communiquer, avec l'UE (115) sur la base de la configuration de répétition multi-TB et de la configuration de domaine temporel :
le premier nombre de répétitions du premier TB ; et le second nombre de répétitions du second TB,
**caractérisé en ce que** la communication du premier nombre de répétitions du premier TB et la communication du second nombre de répétitions du second TB comprend :
la communication d'une première pluralité de répétitions entrelacées du premier TB et du deuxième TB dans un premier canal physique partagé ; et
la communication d'une deuxième pluralité de répétitions entrelacées du premier TB et du deuxième TB dans un deuxième canal physique partagé.
